(19) Europäisches Patentamt
European Patent Office
Office européen des brevets

(11) EP 2 502 953 A1

(12) EUROPEAN PATENT APPLICATION
published in accordance with Art. 153(4) EPC

(43) Date of publication:
**26.09.2012 Bulletin 2012/39**

(21) Application number: **10831581.3**

(22) Date of filing: **17.11.2010**

(51) Int Cl.:
***C08J 5/18*** *(2006.01)* ***C08F 2/44*** *(2006.01)*
***C08F 283/00*** *(2006.01)* ***C08K 5/13*** *(2006.01)*
***C08K 5/3435*** *(2006.01)* ***C08K 5/49*** *(2006.01)*
***C08L 33/00*** *(2006.01)* ***C08L 75/04*** *(2006.01)*
***C09J 7/02*** *(2006.01)*

(86) International application number:
**PCT/JP2010/070476**

(87) International publication number:
**WO 2011/062187 (26.05.2011 Gazette 2011/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2009 JP 2009263096**
**17.11.2010 JP 2010256452**

(71) Applicant: **Nitto Denko Corporation**
**Ibaraki-shi, Osaka 567-8680 (JP)**

(72) Inventors:
- **NAKAGAWA, Yoshio**
  **Ibaraki-shi**
  **Osaka 567-8680 (JP)**
- **YAMAMOTO, Yasunori**
  **Ibaraki-shi**
  **Osaka 567-8680 (JP)**
- **UESUGI, Masanori**
  **Ibaraki-shi**
  **Osaka 567-8680 (JP)**
- **KAI, Makoto**
  **Ibaraki-shi**
  **Osaka 567-8680 (JP)**
- **OOSAWA, Yuka**
  **Ibaraki-shi**
  **Osaka 567-8680 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **LAMINATE FILM**

(57) [MEANS FOR SOLVING] A composite film is one that includes at least a urethane polymer, wherein a Δb* value (value at an acceptance angle of 15 degrees) measured by a spectrocolorimeter after 120 hours in an accelerated weathering test and a Δb* value (value at an acceptance angle of 15 degrees) in an accelerated heat resistance test in a dark place under an atmosphere of 80°C are both 4. 0 or less. The composite film preferably, has a Δb* value (value at an acceptance angle of 15 degrees) in an accelerated moist-heat resistance test in a dark place under an atmosphere of 85°C and 85% relative humidity of 6.0 or less.

EP 2 502 953 A1

**Description**

TECHNICAL FIELD

The present invention relates to a composite film containing at least a urethane polymer, and in particular to a composite film having photo-curable property, weathering resistance, heat resistance, and moist-heat resistance.

BACKGROUND ARTS

A composite film having an acrylic-based polymer and a urethane polymer has been known as a film having both high strength and high elongation at break. In JP 2001-520127 W, a multi-layer film comprising an interpenetrating polymer network layer (IPN layer), and at least one fluoro-containing polymer layer is disclosed as a surface protection film of automobiles and the like. The IPN layer in the multi-layer film makes use of an IPN composite of a urethane polymer and an acrylic polymer, and is obtained by applying a mixture of an acrylic monomer, an acrylic cross-linking agent, and a urethane crosslinked precursor of a polyol and polyisocyanate to a base, polymerizing and cross-linking each of the acrylic monomer and the polyol/polyisocianate being the urethane precursor by heat in the form of non-intervention.

According to this method, there is an advantage that limitation (restriction) by types, combinations and blending proportions of the monomers to be used is difficult to be generated, but there has been a problem of productivity because the urethane polymerisation is a polyaddition reaction which proceeds more slowly than such a chain reaction as the acryl.

In order to solve the problem as to productivity, when an IPN layer is tried to be obtained by utilizing the successive reaction and photopolymerization as disclosed in JP 2003-96140 A, the cross-linked urethane polymer becomes a state of being swollen in the presence of the acrylic monomer and the cross-linking agent to thereby increase a viscosity of the syrup remarkably, and thus there arises a problem of which application to a base by coating or casting becomes very difficult.

Furthermore, when cars and the like drive, there is a case where powder dusts, pebbles, and the like clash into a coating surface of the body. Particularly, when cars drive on a rough road or roads where rock salt, sand, gravel and the like are sprayed for removing snow or the like in cold districts, there is a problem of which the coating surface tends to be damaged and rust is generated from the damaged portion of the coating surface. In automobile fields, in order to prevent the coating surface of an automobile body from being damaged, a transparent adhesive tape may be applied thereto. A polyurethane base material is used as a base of that transparent adhesive tape.

However, it is known that polyurethane has a problem of light resistance, and generates a coloring substance exhibiting conjugate structure, and a nitrogen-containing coloring substance. Therefore, a film containing polyurethane is initially colorless and transparent, but when being left outdoors, there is a case where the film deterioration is generated, such as discoloration (yellowing) due to auto-oxidation induced by ultraviolet rays, and its glossy feeling disappears to thereby reduce good appearance.

In addition, the polyurethane also has problems of heat resistance and moist-heat resistance in a dark place, and is discolored (yellowed). Relating to the yellowing in a dark place, the main factor is similar to its reaction, and in order to prevent such a phenomenon, in JP 09-137016 A and Japanese Patent No. 2625508, there is disclosed the sole use or combined use or the like of a phenol-based or phosphorus-based compound, or a hindered amine-based light stabilizer, a benzotriazole-based ultraviolet absorber, and the like, and it is known that a certain effect can be obtained by such use. However, any method for obtaining a further remarkable effect has not yet been developed.

Although an ultraviolet absorber can be added in order to prevent discoloring (yellowing), when a photopolymerization reaction is carried out through the use of a photopolymerization initiator in forming a film, functions of the photopolymerization initiator is not sometimes exhibited sufficiently due to the coexistence of the ultraviolet absorber and a sufficient photopolymerization reaction is not caused, and thus the curing property deteriorates.

Furthermore, although a hindered amine light stabilizer or/and a phenol-based compound can be added in order to prevent discoloring (yellowing), the addition corresponds to a state of coexisting the hindered amine light stabilizer which suppresses a photopolymerization reaction (namely, radical scavenger), and thus the curing property deteriorates in curing by a radical polymerization reaction with a photopolymerization initiator.

That is, there does not yet exist a film including a urethane-based polymer which performs sufficient photo-curing and has weathering resistance (yellowing resistance), in a state in which a light stabilizer or/and a phenol-based compound is/are added to an ultraviolet absorber.

PRIOR ART TECHNICAL DOCUMENTS

Patent Documents

Patent Document 1: JP 2001-520127 W
Patent Document 2: JP 2003-96140 A
Patent Document 3: JP 09-137016 A
Patent Document 2: Japanese Patent No. 2625508

SUMMARY OF THE INVENTION

PROBLEMS TO BE SOLVED BY THE INVENTION

The present invention has been made to solve the aforementioned problems, and the object of the present invention is to provide a composite film having photo-curable property, weather resistance, heat resistance and moist-heat resistance.

MEANS FOR SOLVING THE PROBLEMS

The composite film of the present invention is characterized by including at least a urethane polymer, in which a $\Delta b^*$ value (value at an acceptance angle of 15 degrees) measured by a spectrocolorimeter after 120 hours in an accelerated weathering test and a $\Delta b^*$ value (value at an acceptance angle of 15 degrees) in an accelerated heat resistance test under an atmosphere of 80°C in a dark place are both 4.0 or less.

Furthermore, the composite film of the present invention further has a $\Delta b^*$ value (value at an acceptance angle of 15 degrees) in an accelerated moist-heat resistance test under an atmosphere of 85°C and 85% relative humidify in a dark place is 6.0 or less.

It is preferable that the composite film of the present invention contains at least one kind of an ultraviolet absorber, at least one kind of a hindered amine light stabilizer, and at least one kind of a phosphorus-based compound and/or at least one kind of a phenol-based compound.

It is preferable that the composite film of the present invention contains a (meth) acrylic-based polymer and a urethane polymer.

The composite film of the present invention can be obtained by irradiating a precursor mixture in which at least one kind of an ultraviolet absorber, at least one kind of a hindered amine light stabilizer, at least one kind of an acylphosphine-based photopolymerization initiator, and at least one kind of phosphorus-based compound and/or a phenol-based compound are added to a composite film precursor that includes at least a urethane polymer, with a light in a photosensitive wavelength range of the photopolymerization initiator.
The composite film precursor is preferably one that includes a (meth) arylic-based monomer and a urethane polymer.

In the present invention, it is preferable that the acylphosphine-based photopolymerization initiator includes at least one of monoacylphosphine oxides represented by the following formula (I) and/or at least one of diacylphosphine oxides represented by the following formula (II).

[Chemical Formula 1]

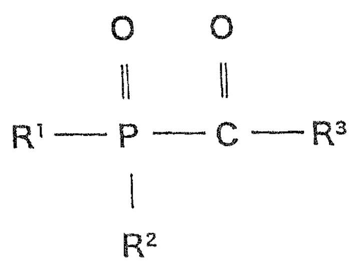

(I)

wherein $R^1$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by halogen (s) or $C_1$ to $C_6$ alkoxy group (s) ; a phenyl group, a naphthyl group or a biphenyl group, substituted by at least one selected from the group

consisting of halogen (s), $C_1$ to $C_{12}$ alkyl group (s) and $C_1$ to $C_{12}$ alkoxy group(s); or a five-membered or six-membered heterocyclic group containing a monovalent N, O, or S, $R^2$ represents phenyl group, naphthyl group or biphenyl group; a phenyl group, a naphthyl group or a biphenyl group, substituted by at least one selected from the group consisting of halogen(s), $C_1$ to $C_{12}$ alkyl group (s) and $C_1$ to $C_{12}$ alkoxy group(s); a five-membered or six-membered heterocyclic group containing monovalent N, O, or S, a $C_1$ to $C_{18}$ alkoxy group, or a phenoxy group; or a phenoxy group, a benzyloxy group or a cyclohexyloxy group, substituted by halogen (s), $C_1$ to $C_4$ alkyl group (s) or $C_1$ to $C_4$ alkoxy group (s) ; or $R^2$ and $R^1$ form a ring together with a phosphorus atom; $R^3$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by halogen (s) or $C_1$ to $C_6$ alkoxy group (s) ; a phenyl group, a naphthyl group or a biphenyl group, substituted by at least one selected from the group consisting of halogen (s), $C_1$ to $C_{12}$ alkyl group(s), and $C_1$ to $C_{12}$ alkoxy group(s); a five-membered or six-membered heterocyclic group containing monovalent N, O, or S; or represents a group represented by the following formula:

[Chemical Formula 2]

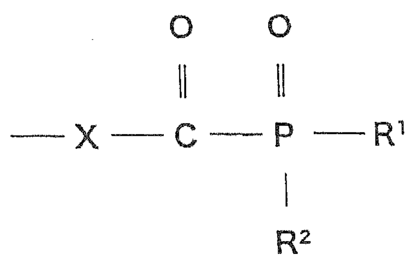

wherein, X represents a $C_2$ to $C_8$ alkylene group or a cyclohexylene group; or represents a phenylene group or a biphenylene group, unsubstituted or substituted by at least one selected from the group consisting of halogen(s), $C_1$ to $C_4$ alkyl group (s) and $C_1$ to $C_4$ alkoxy group(s).

[Chemical Formula 3]

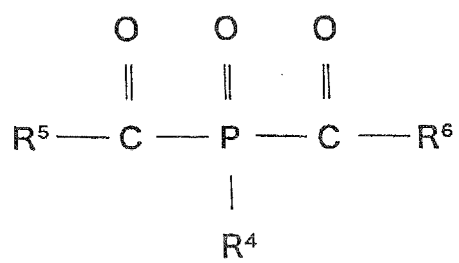

(II)

wherein, $R^4$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, phenyl group, a naphthyl group or a biphenyl group, substituted by at least one selected from the group consisting of halogen(s) and $C_1$ to $C_6$ alkoxy group (s) ; phenyl group, a naphthyl group or a biphenyl group, substituted by at least one selected from the group consisting of halogen (s), $C_1$ to $C_{12}$ alkyl group (s) and $C_1$ to $C_{12}$ alkoxy group(s); a five-membered or six-membered heterocyclic group containing monovalent N, O, or S, a $C_1$ to $C_{18}$ alkoxy group or a phenoxy group; or a phenoxy group, a benzyloxy group, a cyclohexyloxy group, substituted by at least one selected from the group consisting of halogen(s), $C_1$ to $C_4$ alkyl group(s), and $C_1$ to $C_4$ alkoxy group (s) ; and $R^5$ and $R^6$, independently from each other, represent a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen (s) and $C_1$ to $C_6$ alkoxy group (s) ; a phenyl group, a naphthyl group or a biphenyl group, substituted by at least one selected from the group consisting of halogen(s), $C_1$ to $C_{12}$ alkyl group (s)

and $C_1$ to $C_{12}$ alkoxy group(s); or a five-membered or six-membered heterocyclic group containing monovalent N, O, or S.

In the present invention, it is preferable that the precursor mixture further contains an α-hydroxyalkylphenone-based photopolymerization initiator.

In the present invention, it is preferable that the ultraviolet absorber contains at least one ultraviolet absorber selected from the group consisting of benzotriazole-type ultraviolet absorbers and hydroxyphenyltriazine-type ultraviolet absorbers.

In the present invention, it is preferable that a blending amount of the photopolymerization initiator is 0.05% by weight or more and 4.0% by weight or less relative to the amount of a (meth)acrylic component.

It is preferable that a blending amount of the ultraviolet absorber is 0.1% by weight or more and 4.0% by weight or less relative to 100% by weight of the composite film precursor.

It is preferable that a blending amount of the hindered amine light stabilizer is 0.1% by weight or more and 4.0% by weight or less relative to 100% by weight of the composite film precursor.

It is preferable that a blending amount of the phosphorus-based compound is 0.1% by weight or more and 4.0% by weight or less relative to 100% by weight of the composite film precursor.

It is preferable that a blending amount of the phenol-based compound is 0.1% by weight or more and 4.0% by weight or less relative to 100% by weight of the composite film precursor.

In the present invention, it is preferable that the urethane polymer is formed by using at least one kind of diisocyanate selected from the group consisting of methylcyclohexane diisocyanate (hydrogenated TRI), dicyclohexylmethane diisocyanate (hydrogenated MDI), cyclohexane diisocyanate (hydrogenated PPDI), bis(isocyanatomethyl)cyclohexane (hydrogenated XDI), norbornene diisocyanate (NBDI), isophorone diisocyanate (IPDT), hexamethylene diisocyanate (HDI), butane diisocyanate, 2,4-trimethylhexamethylene diisocyanate, and 2,4,4-trimethylhexamethylene diisocyanate.

In the present invention, when the composite film has the (meth) acrylic-based polymer and the urethane polymer, it is preferable that a weight ratio of the (meth) acrylic-based polymer to the urethane polymer in the composite film is within the range of (meth) acrylic polymer / urethane polymer = 1/99 to 80/20.

In the present invention, it is preferable that the composite film contains 1% by weight or more and 15% by weight or less of an acrylic acid-based monomer.

The adhesive sheet of the present invention is characterized by having an adhesive layer on at least one surface of any one of the above-mentioned composite films.

In the present invention, it is preferable that the adhesive sheet is used as a protective sheet for protecting a surface of an adherent.

## EFFECT OF THE INVENTION

According to the present invention, a composite film being excellent in photo-curable property, weathering resistance, heat resistance and moist-heat resistance can be realized. In addition, according to the present invention, it is possible to provide a composite film having the sufficient strength and causing no problem of an odor.

## MODE FOR CARRYING OUT THE INVENTION

Hereinafter, the present inventions will be explained in detail.

The composite film of the present invention is a film containing at least a urethane polymer, namely a film having a urethane polymer alone or a film further containing another polymer. In the present invention, the composite film preferably contains a (meth)acrylic-based polymer and a urethane polymer. In such a case, a weight ratio of the (meth) acrylic-based polymer relative to the urethane polymer in the composite film is preferably within the range of: (meth)acrylic-based polymer / urethane polymer = 1/99 to 80/20. When the weight ratio of the (meth)acrylic-based polymer is less than 1/99, the viscosity of the precursor mixture may become high, resulting in worsening of workability, and when the weight ratio is more than 80/20, the flexibility and the strength as a film cannot be obtained in some cases.

In the present invention, the (meth) acrylic-based polymer is preferably obtained by using an acrylic component containing at least a (meth)acrylic acid-based monomer and a monofunctional (meth) acrylic-based monomer, and in particular, a monofunctional (meth)acrylic-based monomer in which a homopolymer has a glass transition temperature (Tg) of 0°C or more is preferably used. Furthermore, in the present invention, the (meth) acrylic-based polymer is preferably obtained by using an acrylic component further containing a monofunctional (meth)acrylic-based monomer in which a homopolymer has a glass transition temperature (Tg) of less than 0°C.

In the present invention, the (meth)acrylic acid-based monomer is a (meth) acrylic-based monomer having a carboxyl group, and for example, includes acrylic acid, methacrylic acid, maleic acid, crotonic acid, and the like. Among these, acrylic acid is particularly preferred. When the composite film precursor is one that includes a (meth) acrylic-based monomer and a urethane polymer, the content of the (meth)acrylic acid-based monomer is 1% by weight or more

and 15% by weight or less in the composite film precursor, and is preferably 2% by weight or more and 10% by weight or less. When the content of the (meth) acrylic acid-based monomer is less than 1% by weight, there may occur problems in which the reaction requires a long time, making film is very difficult, or the strength of the film is not sufficient. When the content of the (meth) acrylic acid-based monomer is more than 15% by weight, the film may have a high water-absorbing ratio to cause a problem of water resistance. In the above case, the (meth) acrylic acid-based monomer greatly influences the compatibility with the urethane component and the acrylic component in the present invention, and thus the (meth) acrylic acid-based monomer is an essential constitutional element having an extremely important function.

Meanwhile, in the present invention, the concept is such that the term "film" as used herein refers to a sheet and the term "sheet" as used herein refers to a film. In addition, in the present invention, the concept is such that the term "(meth) acryl" such as a (meth) acrylic-based polymer and a (meth) acrylic acid-based monomer, as used herein refers to methacryl and/or acryl. Furthermore, the concept is such that the term "acryl" as used herein also refers to methacryl and/or acryl if there is no problem from the standpoint of common sense.

In the present invention, examples of the monofunctional (meth) acrylic-based monomers having Tg of 0°C or more, include acryloylmorpholine, isobornyl acrylate, dicyclopentanyl acrylate, t-butyl acrylate, cyclohexyl acrylate, lauryl acrylate, and the like. The monofunctional (meth)acrylic-based monomers can be used alone or in combination of two or more of them.

In the present invention, as the monofunctional (meth) acrylic-based monomers having Tg of 0°C or more, there are preferably used at least one of acryloylmorpholine, isobornyl acrylate and dicyclopentanyl acrylate, more preferably acryloylmorpholine and/or isobornyl acrylate, or acryloylmorpholine and/or dicyclopentanyl acrylate, and particularly preferably isobornyl acrylate.

The content of the monofunctional (meth)acrylic-based monomers having Tg of 0°C or more is preferably, 20% by weight or more and 99% by weight or less in the acrylic components, more preferably 30% by weight or more and 98% by weight or less. When the content of the monofunctional (meth) acrylic-based monomers is less than 20% by weigh, a problem in which the strength of the film is not sufficient may be caused. When the content of the monofunctional (meth) acrylic-based monomers is more than 99% by weight, the film may excessively increase frigidity to become brittle.

In the present invention, examples of the monofunctional (meth)acrylic-based monomers having Tg of less than 0°C, include n-butyl, acrylate, 2-ethylhexyl acrylate, isooctyl acrylate, isobutyl acrylate, 2-methoxyethyl acrylate, tetrahydrofrufuryl acrylate, phenoxyethyl acrylate, ethoxyethyl acrylate, 3-methoxybutyl acrylate and the like. These monomers can be used alone or in combination of two or more of them.

In the present invention, as the monofunctional (meth)acrylic-based monomers having Tg of less than 0°C is particularly preferably, used n-butyl acrylate.

Though the monofunctional (meth)acrylic-based monomer having Tg of less than 0°C may also be not contained (0% by weight of the content), when it is contained, the content of the monofunctional (meth)acrylic-based monomer is preferably more than 0% by weight and 50% by weight or less in the acrylic component, more preferably more than 0% by weight and 45% by weight or less. When the content of the monofunctional (meth) acrylic-based monomer is more than 50% by weight, a problem is sometimes caused in which the strength of the film is not sufficient.

The kind, combination and amount to be used of the (meth)acrylic-based monomer can be determined as appropriate in consideration of compatibility with urethane, polymerizability upon curing with light such as radiation, and characteristics of the resultant polymer.

In the present invention, together with the above-mentioned (meth) acrylic-based monomer, monomers such as vinyl acetate, vinyl propionate, styrene, acrylamide, methacrylamide, mono- or dieter of maleic acid and derivatives thereof, N-methylolacrylamide, glycidyl acrylate, glycidyl methacrylate, N,N-dimethylaminoethyl acrylate, N,N-dimethylaminopropyl methacrylamide, 2-hydroxypropyl acrylate, N,N-dimethylacrylamide, N,N-diethylacrylamide, imide acrylate, N-vinylpyrrolidone, oligoester acrylate, ε-caprolactone acrylate, dicyclopentanyl (meth)acrylate, dicyclopentenyl (meth) acrylate, methoxylated cyclododecatriene acrylate, and methoxyethyl acrylate may be copolymerized. Meanwhile, the kind and the amount of the copolymerizable monomers are determined as appropriate in consideration of the properties and the like of the resultant composite film.

Furthermore, other polyfunctional monomers can be added within a range in which the characteristics of the present invention are not impaired. Examples of such polyfunctional monomers include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxyacrylate, polyester acrylate and the like. Particulary, trimethylolpropane tri (meth)acrylate is preferably used as polyfunctional monomer.

The polyfunctional monomer can be contained in an amount of 1 part by weight or more and 20 parts by weight or less relative to 100 parts by weight of the acrylic-based monomer. When the content of the polyfunctional monomer is 1 parts by weight or more, the cohesive force of the composite film is sufficient, and when the content of the polyfunctional monomer is 20 parts by weight or less, the elastic modulus does not become excessively high, and thus the composite

film can follow the unevenness on the surface of the adherent.

The urethane polymer can be obtained by causing a diol to react with a diisocyanate. Although the reaction of the hydroxyl groups of diol with the isocyanate is generally performed with a catalyst, the reaction can be promoted even without a catalyst such as dibutyltin dilaurate or tin octoate, which causes environmental load according to the present invention.

Low molecular weight diols include dihydric alcohols such as ethylene glycol, diethylene glycol, propylene glycol, butylene glycol, and hexamethylene glycol.

Examples of the high molecular weight diols include polyether polyols obtained by addition polymerization of ethylene oxide, propylene oxide, tetrahydrofuran or the like; polyester polyols that are condensation products of an alcohol such as the above-mentioned dihydric alcohol, 1,4-butanediol and 1,6-hexanediol, with a dibasic acid such as adipic acid, azelaic acid, or sebacic acid; acrylic polyol, carbonate polyol, epoxy polyol, caprolactone polyol, and the like. Among these, for example, polyoxytetramethylene glycol (PTMG), polyalkylene carbonate diol (PCD) and the like are preferably used.

Examples of the acrylic polyol include copolymers of monomers having hydroxyl groups, and in addition, copolymers of a hydroxyl group-containing substance and an acrylic-based monomer. The epoxy polyols include amine-modified epoxy resins and the like.

In the present invention, the urethane polymer does not include a cross-linking structure. The diol to be used for forming a urethane polymer is preferably a linear diol. However, as long as the condition is satisfied in which a cross-linking structure is not formed in urethane polymer, the diol may also be a side-chain diol or a diol containing a branched structure. That is, the urethane polymer that constitutes the composite film of the present invention does not contain a cross-linking structure, and thus is structurally totally different from the IPN structure.

In the present invention, the above-mentioned diols can be used alone or in combinations in consideration of solubility to the acrylic-based monomer, reactivity with isocyanate, and the like. When strength of the composite film is required, it is effective to increase the amount of urethane hard segment through the use of a low molecular weight diol. When importance is placed on elongation, it is preferable that a diol having a large molecular weight is used alone. Furthermore, the polyether polyols are generally inexpensive and have good water resistance, and the polyester polyols have high strength. In the present invention, the kind and amount of polyol can be selected freely depending on the intended use and purpose. Moreover, the kind and molecular weight, and amount of polyols to be used can be selected as appropriate also from the viewpoints of properties of bases coated, reactivity with isocyanate and compatibility with the acrylic.

The diisocyanates include aromatic, aliphatic and alicyclic diisocyanates, and dimers, trimers, and the like of these diisocyanates. Examples of the aromatic, aliphatic and alicyclic diisocyanates include tolylene diisocyanate (TDI), diphenylmethane diisocyanate (MDI), xylylene diisocyanate (XDI), naphthylene diisocyanate (NDI), phenylene diisocyanate (PPDI), m-tetramethyl xylylene diisocyanate (TMXDI), methylcyclohexane diisocyanate (hydrogenated TDI), dicyclohexylmethane diisocyanate (hydrogenated MDI), cyclohexane diisocyanate (hydrogenated PPDI), bis (isocyanatomethyl) cyclohexane (hydrogenated XDI), norbornene diisocyanate (NBDI), isophorone diisocyanate (IPDI), hexamethylene diisocyanate (HDI), butane diisocyanate, 2,4-trimethylhexamethylene diisocyanate, 2,4,4-trimethylhexamethylene diisocyanate, and the like. In addition, dimers and trimers of these and polyphenylmethane diisocyanates are used. The trimers include isocyanurate type, biuret type, allophanate type and the like, which can be used appropriately.

Among these, in particular, aliphatic series and alicyclic series diisocyanates such as methylcyclohexane diisocyanate (hydrogenated TDI), dicyclohexylmethane diisocyanate (hydrogenated MDI), cyclohexane diisocyanate (hydrogenated PPDI), bis(isocyanatomethyl)cyclohexane (hydrogenated XDI), norbornene diisocyanate (NBDI), isophorone diisocyanate (IPDI), hexamethylene diisocyanate (HDI), butane diisocyanate, 2,4-trimethylhexamethylene diisocyanate, and 2,4,4-trimethylhexamethylene diisocyanate are preferably used. This is because, by using aromatic series diisocyanates containing a benzene ring, a coloring substances having a conjugated structure is prone to be created due to a photoreaction, and thus they are not preferred. In the present invention, the aliphatic series and alicyclic series diisocyanates containing no benzene ring which are the poor yellowing type or non-yellowing type are preferably used.

The diisocyanates can be used alone or in combination. The kind and combination of the diisocyanates may be appropriately selected from the viewpoints of properties of the base and the like to which the composite film is applied (is coated), the solubility to the acrylic-based monomer, the reactivity with hydroxyl groups, and the like.

In the present invention, regarding the amounts of the diol component and the diisocyanate component for forming the urethane polymer, the amount of the diol component to be used relative to that of the diisocyanate component is such that an NCO/OH (equivalent ratio) is preferably 1.1 or more and 2.0 or less, more preferably, 1.15 or more and 1.35 or less. When the NCO/OH (equivalent ratio) is less than 1.1, the film strength tends to be lowered. When the NCO/OH (equivalent ratio) is 2.0 or less, a sufficient elongation and flexibility can be ensured.

A hydroxyl group-containing acrylic monomer may also be added to the above-mentioned urethane polymer. A (meth) acryloyl group can be introduced at the molecular ends of the urethane prepolymer by adding a hydroxyl group-containing acrylic monomer. Therefore, the copolymerizability with the (meth) acrylic-based monomer is imparted, the

compatibility of the urethane component and the acrylic component is enhanced, and the improvement of S-S properties of breaking strength or the like can be achieved. As the hydroxyl group-containing acrylic monomer, hydroxyethyl (meth) acrylate, hydroxypropyl (meth) acrylate, hydroxybutyl (meth) acrylate, hydroxyhexyl (meth) acrylate and the like can be used. The amount of the hydroxyl group-containing acrylic monomer to be used is preferably, from 0.1 to 10 parts by weight relative to 100 parts by weight of the urethane polymer, more preferably, from 1 to 5 parts by weight.

In the present invention, an ultraviolet absorber is preferably added to the composite film precursor containing at least a urethane polymer. The composite film precursor is preferably one that is made up of the urethane polymer and the (meth)acrylic-based monomer. Examples of ultraviolet absorbers to be used in the present invention include benzotriazole-based ultraviolet absorbers, hydroxyphenyltriazine-based ultraviolet absorbers, benzophenone-based ultraviolet absorbers, benzoate-based ultraviolet absorbers and the like. In the present invention, benzotriazole-based ultraviolet absorbers and/or hydroxyphenyltriazine-based ultraviolet absorbers are preferable.

Examples of benzotriazole-based ultraviolet absorbers include 2-(2-hydroxy-5-tert-butylphenyl)-2H-benzotriazole, ester compounds of benzenepropanoic acid and 3-(2H-benzotriazole-2-yl)-5-(1,1-dimethylethyl)-4-hydrox y ($C_7$ to $C_9$ side-chain alkyl and linear alkyl), mixtures of octyl-3-[3-tert-butyl-4-hydroxy-5-(5-chloro-2H-benzotria zole-2-yl)phenyl] propionate and 2-ethylhexyl-3-[3-tert-butyl-4-hydroxy-5-(5-chloro-2H-benzotriazole-2-yl)phenyl]propionate, 2-(2H-benzotriazole-2-yl)-4,6-bis(1-methyl-1-phenylethyl )phenol, 2-(2H-benzotriazole-2-yl)-6-(1-methyl-1-phenylethyl)-4-( 1,1,3,3-tetramethylbutyl)phenol, reaction products of methyl-3-(3-(2H-benzotriazole-2-yl)-5-tert-butyl-4-hydroxyphenyl)propionate / polyethylene glycol 300, 2-(2H-benzotriazole-2-yl)-p-cresol, 2-[5-chloro(2H)-benzotriazole-2-yl]-4-methyl-6-(tert-but yl)phenol, 2-(2H-benzotriazole-2-yl)-4,6-di-tert-pentylphenol, 2-(2H-benzotriazole-2-yl)-4-(1,1,3,3-tetramethylbutyl)ph enol, 2-2'-methylenebis[6-(2H-benzotriazole-2-yl)-4-(1,1,3,3-t etramethylbutyl)phenol], reaction products of methyl-3-(3-(2H-benzotriazole-2-yl)-5-tert-butyl-4-hydro xyphenyl)propionate and polyethylene glycol 300, 2-(2H-benzotriazole-2-yl)-6-dodecyl-4-methylphenol, 2-[2-hydroxy-3-(3,4,5,6-tetrahydrophthalimide-methyl)-5-methylphenyl] benzotriazole, 2,2'-methylenebis[6-(benzotriazole-2-yl)-4-tert-octylphe nol], and the like.

Examples of hydroxyphenyltriazine-based ultraviolet absorbers include an ultraviolet absorber made up of a reaction product of 2-(4,6-bis(2,4-dimethylphenyl)-1,3,5-triazine-2-yl)-5-hydroxyphenyl and [($C_{10}$ to $C_{16}$, mainly $C_{12}$ to $C_{13}$ alkyloxy)methyl]oxirane, and 1-methoxy-2-propanol; reaction products of 2-(2,4-dihydroxyphenyl)-4,6-bis-(2,4-dimethylphenyl)-1,3 ,5-triazine and (2-ethylhexyl) -glycidic acid ester; 2,4-bis[2-hydroxy-4-butoxyphenyl]-6-(2,4-dibutoxyphenyl) -1,3,5-triazine, 2-(4,6-diphenyl-1,3,5-triazine-2-yl)-5-[(hexyl)oxy]-phen ol, 2-(2-hydroxy-4-[1-octyloxycarbonylethoxy]phenyl)-4,6-bis (4-phenylphenyl)-1,3,5-triazine, and the like.

Examples of benzophenone-based ultraviolet absorbers include 2-hydroxy-4-n-octyloxybenzophenone and the like.

Examples of benzoate-based ultraviolet absorbers include 2,4-di-tert-butylphenyl-3,5-di-tert-butyl-4-hydroxybenzo ate (TINUVIN 120), and the like.

Examples of the benzotriazole-based ultraviolet absorbers that are commercially available include "TINUVIN PS" manufactured by Ciba Japan K.K. as 2-(2-hydroxy-5-tert-butylphenyl)-2H-benzotriazole, "TINUVIN 384-2" manufactured by Ciba Japan K.K. as an ester compound of benzenepropanoic acid and 3-(2H-benzotriazole-2-yl)-5-(1,1-dimethylethyl)-4-hydroxy ($C_7$ to $C_9$ side-chain alkyl and linear alkyl), "TINUVIN 109" manufactured by Ciba Japan K.K. as a mixture of octyl-3-[3-tert-butyl-4-hydroxy-5-(5-chloro-2H-benzotria zole-2-yl)phenyl]propionate and 2-ethylhexyl-3-[3-tert-butyl-4-hydroxy-5-(5-chloro-2H-benzotriazole-2-yl)phenyl]propionate, "TINUVIN 900" manufactured by Ciba Japan K.K. as 2-(2H-benzotriazole-2-yl)-4,6-bis(1-methyl-1-phenylethyl )phenol, "TINUVIN 928" manufactured by Ciba Japan K.K. as 2-(2H-benzotriazole-2-yl)-6-(1-methyl-1-phenylethyl)-4-( 1,1,3,3-tetramethylbutyl)phenol, "TINUVIN 1130" manufactured by Ciba Japan K.K. as a reaction product of methyl-3-(3-(2H-benzotriazole-2-yl)-5-tert-butyl-4-hydroxyphenyl)propionate / polyethylene glycol 300, "TINUVIN P" manufactured by Ciba Japan K.K. as 2-(2H-benzotriazole-2-yl)-p-cresol, "TINUVIN 326" manufactured by Ciba Japan K.K. as 2-[5-chloro(2H)-benzotriazole-2-yl]-4-methyl-6-(tert-butyl) phenol, "TINUVIN 328" manufactured by Ciba Japan K.K. as 2-(2H-benzotriazole-2-yl)-4,6-di-tert-pentylphenol, "TINUVIN 329" manufactured by Ciba Japan K.K. as 2-(2H-benzotriazole-2-yl)-4-(1,1,3,3-tetramethylbutyl)ph enol, "TINUVIN 360" manufactured by Ciba Japan K.K. as 2-2'-methylenebis[6-(2H-benzotriazole-2-yl)-4-(1,1,3,3-tetramethylbutyl)phenol], "TINUVIN 213" manufactured by Ciba Japan K.K. as a reaction product of methyl-3-(3-(2H-benzotriazole-2-yl)-5-tert-butyl-4-hydro xyphenyl)propionate and polyethylene glycol 300, "TINUVIN 571" manufactured by Ciba Japan K.K. as 2-(2H-benzotriazole-2-yl)-6-dodecyl-4-methylphenol, "Sumisorb 250" manufactured by Sumitomo Chemical Co., Ltd. as 2-[2-hydroxy-3-(3,4,5,6-tetrahydrophthalimide-methyl)-5-methylphenyl]benzotriazole, "ADKSTAB LA31" manufactured by ADEKA Corporation as 2,2'-methylenebis[6-(benzotriazole-2-yl)-4-tert-octylphe nol], and the like.

Examples of hydroxyphenyltriazine-based ultraviolet absorbers that are commercially available include "TINUVIN 400" manufactured by Ciba Japan K.K. as an ultraviolet absorber made up of a reaction product of 2-(4,6-bis(2,4-dimethylphenyl)-1,3,5-triazine-2-yl)-5-hydroxyphenyl and [($C_{10}$ to $C_{16}$, mainly $C_{12}$ to $C_{13}$ alkyloxy)methyl]oxirane, and 1-methoxy-2-propanol; "TINUVIN 405" manufactured by Ciba Japan K.K. as a reaction product of 2-(2,4-dihydroxyphenyl)-4,6-bis-(2,4-dimethylphenyl)-1,3 ,5-triazine and (2-ethylhexyl) -glycidic acid ester, "TINUVIN 460" manufactured by Ciba Japan K.K. as 2,4-bis[2-hydroxy-4-butoxyphenyl]-6-(2,4-dibutoxyphenyl) -1,3,5-triazine, "TINUVIN 1577" manufactured by Ciba Japan K.K. as 2-(4,6-diphenyl-1,3,5-triazine-2-yl)-5-[(hexyl)oxy]-phen ol, "TINUVIN 479" manufactured by Ciba Japan K.K. as 2-(2-hydroxy-4-[1-octyloxycarbonylethoxy]phenyl)-4,6-bis (4-phenylphenyl)-1,3,5-triazine, and the like.

Examples of benzoate-based ultraviolet absorbers that are commercially available include "TINUVIN 120" manufactured by Ciba Japan K.K. as 2,4-di-tert-butylphenyl-3,5-di-tert-butyl-4-hydroxybenzo ate, and the like.

In the present invention, the above-mentioned ultraviolet absorbers can be used alone or in combination of two or more of them.

A total amount of the ultraviolet absorbers to be used is preferably, 0.1% by weight or more and 4.0% by weight or less relative to 100% by weight of the composite film precursor, more preferably 0.5% by weight or more and 2.0% by weight or less. When the content of the ultraviolet absorbers is 0.1% by weight or more, ultraviolet light that causes deterioration and coloring is sufficiently absorbed. When the content of the ultraviolet absorbers is 4.0% by weight or less, coloring is not caused due to the ultraviolet absorbers themselves.

The film may be colored in some cases. In the present invention, "coloring" includes, for example, coloring immediately after a film formation, coloring of the formed film generated by external factors such as sunlight, heat and humidity in a dark place. The coloring immediately after a film formation is caused by main components of the materials or an additive added to the materials, and is the initial coloring in the film. The coloring generated by external factors such as sunlight, heat and humidity in a dark place, is one that occurs because of the change in chemical composition of the film by external factors, and is a discoloration of the film. The coloring in the film can be indicated as, for example, a $\Delta b^*$ value which is a difference between a b* value of a reference value (initial value, etc.) and a b* value of a value at the time of measurement. The b* value can be measured by using a multi-angle spectrocolorimeter. In the composite film of the present invention, a $\Delta b^*$ value (value at an acceptance angle of 15 degrees) measured by a spectrocolorimeter after 120 hours in an accelerated weathering test and a $\Delta b^*$ value (value at an acceptance angle of 15 degrees) in an accelerated heat resistance test in a dark place under an atmosphere of 80 °C are 4.0 or less, respectively, more preferably 3.5 or less. When the $\Delta b^*$ value is more than 4.0, the color difference between the composite film and an adherent becomes larger when the composite film is bonded to the adherent such as a white painted board, and thus the appearance may be impaired. When the $\Delta b^*$ value is 4.0 or less, a good appearance can be ensured sufficiently. In the composite film of the present invention, furthermore, a $\Delta b^*$ value (value at an acceptance angle of 15 degrees) in an accelerated moist-heat resistance test in a dark place under an atmosphere of 85°C and 85% relative humidity is preferably 6.0 or less.

The accelerated weathering test, the accelerated heat resistance test and accelerated moist-heat resistance test to be employed in the present invention will be explained in EXAMPLE . Meanwhile, the composite film to be measured was, for the convenience of performing tests, one which was provided with a transparent adhesive layer (for example, an acrylic-based adhesive layer) on one side thereof, and there is no problem in measuring b* value because the adhesive layer is transparent and a thickness thereof is as thin as 50 $\mu$m. In addition, in the present invention, when referring to "composite film", there is a case where a coating layer is included.

In the present invention, it is preferable that a light stabilizer is added to the composite film precursor containing at least a urethane polymer. The light stabilizer to be used in the present invention is required to be a hindered amine light stabilizer (HALS). Preferable examples of the hindered amine-based light stabilizers include the compounds represented by the following formula (III).

[Chemical Formula 4]

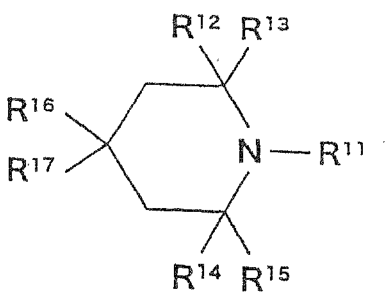

(III)

wherein $R^{11}$ represents an alkylene group, an alkyl group, or an ether group, and $R^{12}$, $R^{13}$, $R^{14}$, $R^{15}$, $R^{16}$, and $R^{17}$ each independently represent a hydrogen atom, alternatively an alkyl group or an alkoxy group that may be substituted.

Examples of the hindered amine light stabilizers that are commercially available include "TINUVIN 622" (manufactured by Ciba Japan K. K.) as a light stabilizer being a polymerized product of dimethyl succinate and 4-hydroxy-2,2,6,6-tetramethyl-1-piperidineethanol, "TINUVIN 119" (manufactured by Ciba Japan K.K.) as a light stabilizer being a one-on-one reaction product of N,N',N'',N'''-tetrakis-(4,6-bis-(butyl-(N-methyl-2,2,6,6-t etramethylpiperidine-4-yl)amino)-triazine-2-yl)-4,7-di azadecane-1, 10-diamine and a polymerized product of dimethyl succinate and 4-hydroxy-2,2,6,6-tetramethyl-1-piperidineethanol, "TINUVIN 2020" (manufactured by Ciba Japan K.K.) as a light stabilizer being a polycondensation product of dibutylamine 1,3-triazine N,N'-bis(2,2,6,6-tetramethyl-4-piperidyl-1,6-hexamethyle nediamine) and N-(2,2,6,6-tetramethyl-4-piperidyl)butylamine, "TINUVIN 944" (manufactured by Ciba Japan K.K.) as a light stabilizer being poly[{6-(1,1,3,3-tetramethylbutyl)amino-1,3,5-triazine-2 ,4"-diyl}{2,2,6,6-tetramethyl-4-piperidyl}imino] hexamethy lene{(2,6,6-tetramethyl-4-piperidyl) imino}, "TINUVIN 765" (manufactured by Ciba Japan K. K.) as a light stabilizer being a mixture of bis(1,2,2,6,6-pentamethyl-4-piperidyl)sebacate and methyl 1,2,2,6,6-pentamethyl-4-piperidyl sebacate, "TINUVIN 770" (manufactured by Ciba Japan K.K.) as a light stabilizer being bis(2,2,6,6-tetramethyl-4-piperidyl)sebacate, "TINUVIN 123" (manufactured by Ciba Japan K.K.) as a light stabilizer being a reaction product of decanedioic acid bis(2,2,6,6-tetramethyl-1-(octyloxy)-4-piperidinyl)ester (1,1-dimethylethylhydroperoxide) and octane, "TINUVIN 144" (manufactured by Ciba Japan K.K.) as a light stabilizer being bis(1,2,2,6,6-pentamethyl-4-piperidyl)[[3,5-bis(1,1-dime thylethyl)-4-hydroxyphenyl]methyl]butylmalonate, "TINUVIN 152" (manufactured by Ciba Japan K.K.) as a light stabilizer being a reaction product of 2-aminoethanol and a reaction product of cyclohexane and N-butylperoxide-2,2,6,6-tetramethyl-4-piperidineamine-2, 4,6-trichloro-1,3,5-triazine, "TINUVIN 292" (manufactured by Ciba Japan K.K.) as a light stabilizer being a mixture of bis(1,2,2,6,6-pentamethyl-4-piperidyl)sebacate and methyl-1,2,2,6,6-pentamethyl-4-piperidyl sebacate, "Viosorb 765" (manufactured by KYODO YAKUHIN K.K.), and the like.

In the present invention, the above-mentioned hindered amine light stabilizers can be used alone or in combination of two or more of them. A total amount of these hindered amine light stabilizers to be used is preferably 0.1% by weight or more and 4.0% by weight or less relative to 100% by weight of the composite film precursor, and more preferably 0.5% by weight or more and 2.0% by weight or less. When the amount of the hindered amine light stabilizers is 0.1% by weight or more, the function of preventing deterioration is exhibited sufficiently, and when it is 4.0% by weight or less, coloring by the light stabilizers themselves is not caused.

In the present invention, an acylphosphine-based photopolymerization initiator is added to the composite film precursor containing at least a urethane polymer. The composite film precursor is preferably obtained by using the urethane polymer and the acrylic-based monomer. The acylphosphine-based photopolymerization initiator to be used in the present invention has preferable at least one of monoacylphosphine oxide having a structure represented by the following formula (I), and/or at least one of diacylphosphine oxide having a structure represented by the following formula (II).

The formula (I) is shown below.

[Chemical Formula 5]

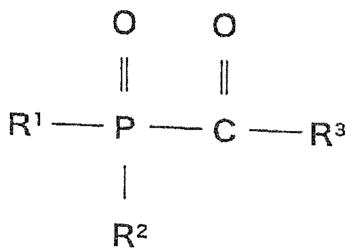

(I)

wherein $R^1$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen(s) and $C_1$ to $C_6$ alkoxy group (s) ; a phenyl group, a naphthyl group or a biphenyl group, substituted by at least one selected from the group consisting of halogen (s), $C_1$ to $C_{12}$ alkyl group(s) and $C_1$ to $C_{12}$ alkoxy group(s); or a five-membered or six-membered heterocyclic group containing monovalent N, O, or S, $R^2$ represents a phenyl group, a naphthyl group or a biphenyl group; a phenyl group, a naphthyl group or a biphenyl group, substituted by at least one selected from the group consisting of halogen (s), $C_1$ to $C_{12}$ alkyl group(s) and $C_1$ to $C_{12}$ alkoxy group (s); a five-membered or six-membered heterocyclic group containing monovalent N, O, or S, a $C_1$ to $C_{18}$ alkoxy group, or a phenoxy group; or a phenoxy group, a benzyloxy group or a cyclohexyloxy group, substituted by at least one selected from the group consisting of halogen (s), $C_1$ to $C_4$ alkyl group(s) and $C_1$ to $C_4$ alkoxy group(s) ; or $R^2$ and $R^1$ form a ring together with a phosphorus atom; $R^3$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl, group, substituted by a halogen or a $C_1$ to $C_6$ alkoxy group; a phenyl group, a naphthyl group or a biphenyl group, substituted by at least one selected from

the group consisting of halogen (s), $C_1$ to $C_{12}$ alkyl group(s), and $C_1$ to $C_{12}$ alkoxy group(s); a five-membered or six-membered heterocyclic group containing monovalent N, O, or S; or represents a group represented by the following formula:

[Chemical Formula 6]

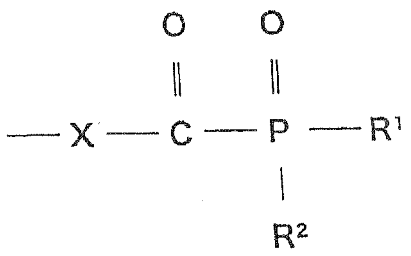

wherein, X represents a $C_2$ to $C_8$ alkylene group or a cyclohexylene group; or represents a phenylene group or a biphenylene group, unsubstituted or substituted by at least one selected from the group consisting of halogen(s), $C_1$ to $C_4$ alkyl group (s) and $C_1$ to $C_4$ alkoxy group(s).

[Chemical Formula 7]

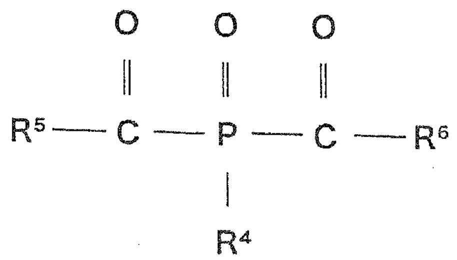

(II)

wherein, $R^4$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen (s) and $C_1$ to $C_6$ alkoxy group (s) ; a phenyl group, a naphthyl group or a biphenyl group, substituted by at least one selected from the group consisting of halogen(s), $C_1$ to $C_{12}$ alkyl group (s) and $C_1$ to $C_{12}$ alkoxy group(s); a five-membered or six-membered heterocyclic group containing monovalent N, O, or S, a $C_1$ to $C_{18}$ alkoxy group or a phenoxy group; a phenoxy group, a benzyloxy group, a cyclohexyloxy group, substituted by at least one selected from the group consisting of halogen (s), $C_1$ to $C_4$ alkyl group(s), and $C_1$ to $C_4$ alkoxy group(s), and $R^5$ and $R^6$, independently from each other, represent a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenol group, a naphthyl group or a biphenyl group, substituted by at least one selected from the group consisting of halogen (s) and $C_1$ to $C_6$ alkoxy group (s) ; a phenyl group, a naphthyl group or a biphenyl group, substituted by at least one selected from the group consisting of halogen(s), $C_1$ to $C_{12}$ alkyl group(s) and $C_1$ to $C_{12}$ alkoxy group(s); or a five-membered or six-membered heterocyclic group containing monovalent N, O, or S.

$R^1$ in the formula (I) preferably, represents a phenyl group; or a phenyl group substituted by one or more selected from the group consisting of halogen(s), $C_1$ to $C_{12}$ alkyl group(s) and $C_1$ to $C_{12}$ alkoxy group(s).

More preferably, $R^1$ represents a phenyl group; or a phenyl group substituted by one to three of $C_1$ to $C_4$ alkyl group(s), particularly preferably $R^1$ represents a phenyl group.

$R^2$ in the formula (I) represents preferably a phenyl group or a phenoxy group; a phenyl group or a phenoxy group substituted by one or more selected from the group consisting of halogen(s), $C_1$ to $C_{12}$ alkyl group(s), and $C_1$ to $C_{12}$ alkoxy group(s); or a $C_1$ to $C_{18}$ alkoxy group.

More preferably, $R^2$ represents a phenyl group or a phenoxy group; or a phenyl group or a phenoxy group substituted by one to three of alkyl group (s), in particular by one to three of methyl group (s) ; or a $C_1$ to $C_8$ alkoxy group.

Particularly preferably, $R^2$ represents a $C_1$ to $C_8$ alkoxy group, in particular a $C_1$ to $C_4$ alkoxy group.

$R^3$ represents preferably phenyl group; or a phenyl group substituted by one or more selected from the group consisting of halogen(s), $C_1$ to $C_{12}$ alkyl group(s), and $C_1$ to $C_{12}$ alkoxy group(s).

More preferably, $R^3$ represents a phenyl group substituted at least at positions 2 and 6, at positions 2 and 4, or at positions 2, 4 and 6 (relative to the carbonyl group) by $C_1$ to $C_8$ alkyl group, preferably by $C_1$ to $C_3$ alkyl group, particularly by methyl group.

Particularly preferably, $R^3$ represents a 2,4-dimethylphenyl group or a 2,4,6-trimethylphenyl group.

$R^4$ in the formula (II) represents preferably a phenyl group or a phenoxy group; a phenyl group or a phenoxy group substituted by one or more selected from the group consisting of halogen(s), $C_1$ to $C_{12}$ alkyl group(s), and $C_1$ to $C_{12}$ alkoxy group(s); or a $C_1$ to $C_{18}$ alkoxy group or a $C_1$ to $C_{18}$ alkyl group.

More preferably, $R^4$ represents a phenyl group or a phenoxy group; or a phenyl group substituted by $C_1$ to $C_4$ alkyl group(s), and the alkyl group represents especially a methyl group. Particularly preferably, $R^4$ represents a phenyl group.

$R^5$ and $R^6$ in the formula (II), independently from each other, represents preferably, a phenyl group; or a phenyl group substituted by one or more selected from the group consisting of halogen (s), $C_1$ to $C_{12}$ alkyl group (s), and $C_1$ to $C_{12}$ alkoxy group(s).

More preferably, $R^5$ and $R^6$, independently from each other, represents a phenyl group substituted at positions 2 and 6, at positions 2 and 4, or at positions 2, 4 and 6 (relative to the carboxyl group) by $C_1$ to $C_8$ alkoxy group or alkyl group, preferably by $C_1$ to $C_4$ alkoxy group or alkyl group, in particular by a methyl group.

Particularly preferably, $R^5$ and $R^6$ each represent 2,4-dimethylphenyl group, in particular 2,4,6-trimethylphenyl group.

Examples of the acylphosphine-based photopolymerization initiators that is used in the present invention include bis(2,6-dimethoxybenzoyl)phenylphosphine oxide, bis(2,6-dimethoxybenzoyl)(2,4,4-trimethylpentyl)phosphine oxide, bis (2, 6-dimethoxybenzoyl) -n-butylphosphine oxide, bis(2,6-dimethoxybenzoyl)-(2-methylpropane-l-yl)phosphine oxide, bis(2,6-dimethoxybenzoyl)-(1-methylpropane-1-yl)phosphine oxide, bis (2, 6-dimethoxybenzoyl) -t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl)phosphine oxide, bis(2,4-dimethoxybenzoyl)(2-methylpropane-1-yl)phosphine oxide, bis(2,4,6-trimethylbenzoyl)(2,4-dipentoxyphenyl)phosphine oxide, bis(2,6-dimethoxybenzoyl)benzylphosphine oxide, bis(2,6-dimethoxybenzoyl)-2-phenylpropylphosphine oxide, bis(2,6-dimethoxybenzoyl)-2-phenylethylphosphine oxide, bis(2,6-dimethoxybenzoyl)benzylphosphine oxide, bis(2,6-dimethoxybenzoyl)-2-phenylpropylphosphine oxide, bis(2,6-dimethoxybenzoyl)-2-phenylethylphosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphi ne oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylpho sphine oxide, bis(2,4,6-trimethylbenzoyl)-2,4-di-n-butoxyphenylphosphi ne oxide, 2,4,6-trimethylbenzoyl diphenylphosphine oxide, bis(2,6-dimethoxybenzoyl)-2,4,4-trimethylpentylphosphine oxide, bis (2,4,6-trimethylbenzoyl)isobutylphosphine oxide, 2,6-dimethoxybenzoyl-2,4,6-trimethylbenzoyl-n-butylphosp hine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide] decane, tri (2-methylbenzoyl) phosphine oxide, and the like.

Among these, bis(2,4,6-trimethylbenzoyl)phenylphosphine oxide, bis(2,4,6-trimethylbenzoyl)-2,4-di-n-butoxyphenylphosphi ne oxide, 2,4,6-trimethylbenzoyl diphenylphosphine oxide, and bis(2,6-dimethoxybenzoyl)-2,4,4-trimethylpentylphosphine oxide are particularly preferred.

In the present invention, alkylphenone-based photopolymerization initiator can also be used in combination with the acylphosphine-based photopolymerization initiator. Examples of the alkylphenone-based photopolymerization initiators include $\alpha$-hydroxyalkylphenone and the like. By using $\alpha$-hydroxyalkylphenone in combination, the rate of polymerisation can be improved.

Examples of the $\alpha$-hydroxyalkylphenone-based photopolymerization initiators that can be used in the present invention include 1-hydroxy-cyclohexyl-phenylketone, 2-hydroxy-2-methyl-1-phenyl-propane-1-one, 1-(4-isopropylphenyl)-2-hydroxy-2-methyl-propane-1-one, 1-[4-(2-hydroxyethoxy)phenyl]-2-hydroxy-2-methyl-propane -1-one, and the like.

Examples of the acylphosphine-based photopolymerization initiators that are commercially available include "DAROCUR TPO" (produced by Ciba Japan K. K.) as 2,4,6-trimethylbenzoyl-diphenyl-phosphine oxide, "IRGACURE 819" (manufactured by Ciba Japan K.K.) as bis (2,4, 6-trimethylbenzoyl) -phenylphosphine oxide, and the like. Examples of the alkylphenone-based photopolymerization initiators that are commercially available include "IRGACURE 184" (manufactured by Ciba Japan K.K.) as $\alpha$-hydroxyalkylphenone and the like. In addition, examples of the photopolymerization initiators in which acylphosphine-based photopolymerization initiator and alkylphenone-based photopolymerization initiator are premixed, include "IRGACURE 1850" (manufactured by Ciba Japan K.K.) which mixes bis(2,6-dimethoxybenzoyl)-2,4,4-trimethyl-pentylphosphine oxide and 1-hydroxy-cyclohexyl-phenylketone, and can be also used in the present invention.

In the present invention, the acylphosphine-based photopolymerization initiators can be used alone or in combination of two or more of them. The total amount of these acylphosphine-based photopolymerization initiators to be used is preferably 0.05% by weight or more and 4. 0% by weight or less relative to the acrylic component, more preferably, 0.1% by weight or more and 2.0% by weight or less. When the amount of the acylphosphine-based photopolymerization initiators to be used is 0.05% by weight or more, the composite film has a sufficient curing property, and when the amount of the acylphosphine-based photopolymerization initiators is 4.0% by weight or less, the initial coloring in the composite film due to a residue of the undecomposed initiators decreases.

In the present invention, the curing property can be indicated by a ratio of the non-volatile component after irradiating a mixture in which an ultraviolet absorber and the like are added to the composite film precursor containing at least a urethane polymer, for example to a composite film precursor containing a urethane polymer and a (meth) acrylic-based monomer, with radiation in a photosensitive wavelength range of the photopolymerization initiator, for curing, that is, can be indicated by a polymerization ratio. The non-volatile component (in %) can be obtained as below, for example.

That is, a weight (W1) of a composite film after curing (a cast film, a separator or the like is removed, as appropriate) is measured. Subsequently, the composite film after measuring the weight is heat-treated at 130 °C for two hours and the unreacted (meth)acrylic monomers are removed. A weight (W2) of the composite film after heat treatment is measured, and then the non-volatile component (%) is obtained in accordance with the following equation.

Non-volatile component (%) = Polymerization ratio (%) = (weight (W2) after heat treatment) / weight (W1) before heat treatment) X 100

The non-volatile component (polymerisation ratio) of the composite film is preferably 96% or more, more preferably 97% or more. When the non-volatile component (polymerization ratio) is less than 96%, the amount of the unreacted component remaining is large, and thus there may arise a problem of an odor or a problem of the insufficient strength of the resulting composite film. When the non-volatile component (polymerization ratio) is 96% or more, the monomers are sufficiently reacted, and thus the composite film has low odor and the strength of the composite film is sufficiently high.

The composite film of the present invention preferably further contains at least one kind of a phosphorus-based compound and/or at least one kind of a phenol-based compound.

A blending amount of the phosphorus-based compound is preferably 0.1% by weight or more and 4.0% by weight or less, more preferably 0.2% by weight or more and 3.0% by weight or less, relative to 100% by weight of the composite film precursor.

Furthermore, a blending amount of the phenol-based compound is preferably 0.1% by weight or more and 4.0% by weight or less, more preferably 0.2% by weight or more and 3.0% by weight or less, relative to 100% by weight of the composite film precursor.

In the present invention, the phosphorus-based compound and the phenol-based compound can be used alone or in combination, and when used in combination, a total blending amount of the phosphorus-based compound and the phenol-based compound is preferably 0.2% by weight or more and 5.0% by weight or less, more preferably, 0.3% by weight or more and 4.0% by weight or less, relative to 100% by weight of the composite film precursor.

Examples of the phenol-based compounds to be used in the present invention include a compound made up of a phenolic structure having a bulky substituent (for example, t-butyl, sec-butyl, neopentyl, or the like), and are, for instance, a compound represented by the following formula, or thiodiethylenebis[3-(3,5-di-tert-butyl-4-hydroxyphenyl)-propionate], N,N'-hexane-1,6-diylbis[3-(3,5-di-tert-butyl-4-hydroxyph enyl)propionamide], hexamethylenebis [3-(3,5-di-tert-butyl-4-hydroxyphenyl)pr opionate], benzene propanoic acid 3,5-bis(1,1-dimethylethyl)-4-hydroxyisooctyl ester, diethyl[[3,5-bis(1,1-dimethylethyl)-4-hidoroxyphenyl]met hyl]phosphonate, 2,4-dimethyl-6-(1-methylpentadecyl) phenol, 4, 6-bis (octylthiomethyl) -o-cresol (IRGANOX 1520L), and the like.

[Chemical Formula 8]

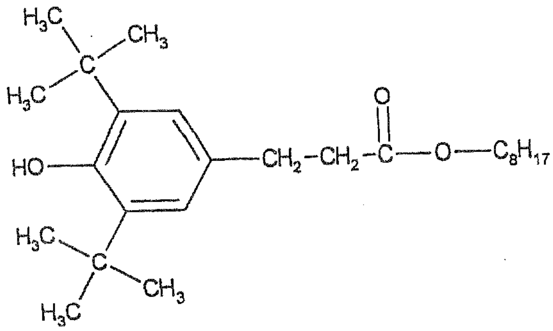

($C_8H_{17}$ being isooctyl group)

The aforementioned phenol-based compounds can be commercially available and examples of them can include Irganox 1010, Irganox 1010FF, Irganox 1035, Irganox 1035FF, Irganox 1076, Irganox 1076FD, Irganox 1076DWJ, Irganox 1098, Irganox 1135, Irganox 1330, Irganox 1726, Irganox 1425WL, Irganox 1520L, Irganox 245, Irganox 245FF, Irganox 245DWJ, Irganox 259, Irganox 3114, Irganox 5057, Irganox 565, (Irganox 565DD, Irganox 295, Irganox 1222, Irganox 1141 (all manufactured by CIBA JAPAN K.K.). Meanwhile, as commercially available chemicals of the phenol-based compound represented by the aforementioned formula, "Irganox 1135" (manufactured by CIBA JAPAN K.K.) can be obtained.

The phosphorus-based compound to be used in the present invention is not particularly limited and is desirably, for example, a tri-substituted phosphite compound represented by the following formula.

[Chemical Formula 9]

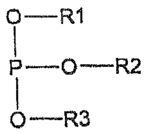

wherein R1, R2 and R3 may be the same or different and represent an aromatic or aromatic-aliphatic group having 1 to 18 carbon atoms, or a linear or branched aliphatic group containing ether groups as necessary, or R1 and R2 form a heterocyclic 5- or 6-membered ring together with the phosphorus atom and two oxygen atoms. However, at least one of the substituents R1, R2 or R3 represents an aromatic group having 6 to 18 carbon atoms or a linear or branched aliphatic group having 9 to 18 carbon atoms.

Specifically, examples are an aryl phosphite such as triphenyl phosphite or tris (nonylphenyl) phosphite; an alkyl-aryl phosphite such as diphenyl isooctyl phosphite, diphenyl isodecyl phosphite, diisodecyl phenyl phosphite, diisooctyl octylphenyl phosphite, phenyl neopentyl glycol phosphite or 2,4,6-tri-tert-butylphenyl-(2-butyl-2-ethyl-1,3-propanediol) phosphite; an alkyl phosphite such as triisodecyl phosphite, trilauryl phosphite or tris(tridecyl) phosphite; and an aromatically or aliphatically substituted diphosphite such as diisodecyl pentaerythritol diphosphite, distearyl pentaerythritol diphosphite, bis(2,4-di-tert-butylphenyl)pentaerythritol diphosphite or tetraphenyl dipropylene glycol diphosphite; and the like.

Among these, triisodecyl phosphite, phenyl diisodecyl phosphite and diphenyl isodecyl phosphite are suitable, and the use of the mixture thereof is particularly suitable. Meanwhile, the structures of triisodecyl phosphite, phenyl diisodecyl phosphite, diphenyl isodecyl phosphite, and triphenyl phosphite are shown in the following.

[Chemical Formula 10]

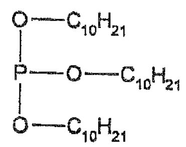

($C_{10}H_{21}$ being isodecyl group)
Structure of tri-isodecyl phosphite

[Chemical Formula 11]

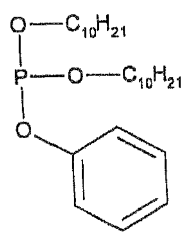

($C_{10}H_{21}$ being isodecyl group)
Structure of di-isodecyl phenyl phosphite

[Chemical Formula 12]

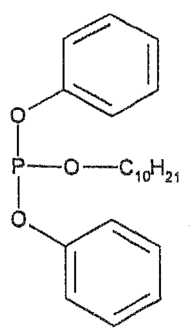

($C_{10}H_{21}$ being isodecyl group)
Structure of isodecyl diphenyl phosphite

[Chemical Formula 13]

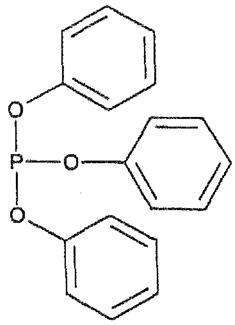

Structure of triphenyl phosphite

Examples of commercially available phosphorus-based compounds include Irgafos 168, Irgafos 168FF, Irgafos 12, Irgafos 38 (all manufactured by CIBA JAPAN K.K.), and the like.

The composite film of the present invention is, as mentioned above, a composite film containing at least a urethane polymer and, for example, preferably is a composite film containing a (meth) acrylic-based polymer and a urethane polymer, and further containing at least one kind of ultraviolet absorber, at least one kind of hindered amine light stabilizer, and at least one kind of phosphorus-based compound and/or a phenol-based compound.

The composite film can contain generally used additives, for example, antioxidants, fillers, pigments, colorants, flame retardants, antistatic agents, as necessary, within a range not inhibiting the effects of the present invention. These additives are used in ordinary amounts depending on their kind. These additives may be added in advance prior to the polymerization reaction of diisocyanate and diol, or may be added prior to polymerisation of urethane polymer with (meth) acrylic-based monomer.

Furthermore, in order to adjust the viscosity at the time of coating, a small amount of a solvent may be added. The solvent can be selected appropriately from commonly used solvents. Examples of such solvents include ethyl acetate, toluene, chloroform, dimethylformamide, and the like.

When the composite film of the present invention contains a (meth)acrylic-based polymer and a urethane polymer, for example, a reaction of a diol with a diisocyanate in a (meth) acrylic-based monomer as a diluent is performed to form a urethane polymer and then to form a composite film precursor containing the (meth) acrylic-based monomer and the urethane polymer as main components. Subsequently, to the composite film precursor, there are added at least one kind of ultraviolet absorber, at least one kind of hindered amine light stabilizer, and at least one kind of phosphorus-based compound and/or phenol-based compound, and further at least one kind of acylphosphine-based photopolymerization initiator as necessary, to form a mixture (precursor mixture).

The composite film can be formed by coating the precursor mixture on a base or the like (which is release-treated as necessary) , and curing it by irradiating the coated precursor mixture with a light in a photosensitive wavelength range of the photopolymerization initiator depending on the kind of the photopolymerization initiator used, and then separating and removing the base or the like. Alternatively, a composite film can also be obtained in the form of being stacked on the base or the like without separating and removing the base or the like. It should be noted that in the present invention, a cast film is included in the base.

Specifically, after the diol is dissolved in the (meth) acrylic monomer, the diisocyanate or the like is added to the resultant material and then by reacting the diisocyanate with the diol, the viscosity is adjusted , and to this mixture, ultraviolet absorber(s), hindered amine light stabilizer(s), phosphorus-based compound(s) and/or phenol-based compound(s), and as necessary, acylphosphine-based photopolymerization initiator(s) and the like are further mixed, and a resultant mixture (precursor mixture) is coated on the base and the like, or on a release-treated surface of the base and the like as necessary, and then by curing the coating through the use of a low-pressure mercury lamp or the like, a composite film is able to be obtained. In this method, the (meth)acrylic-based monomer may be added at a time during the urethane synthesis or may be added separately in several times. In addition, the diisocyanate is dissolved in the (meth) acrylic-based monomer, and then the diol may be reacted with the resultant. According to this method, the molecular weight is not limited and polyurethanes having a high molecular weight can be produced, and thus the molecular weight of the finally obtained urethane can be designed to a desired size.

At this time, in order to avoid inhibition of polymerization by oxygen, a release-treated sheet (separator and the like) may be put on the precursor mixture coated on the base or the like to block oxygen, or the base material may be placed in a vessel filled with an inert gas to decrease the concentration of oxygen.

In the present invention, the kind of radiation or the like and the kind of the lamp to be used for irradiation can

be selected appropriately, and low-pressure lamps such as a fluorescent chemical lamp, a black light and a bactericidal lamp as well as high-pressure lamps such as a metal halide lamp and a high-pressure mercury lamp, or the like can be used.

The irradiation amount of ultraviolet rays or the like can be set arbitrarily depending on the characteristics required for the film. Generally, the irradiation amount of ultraviolet rays is within the range of 100 to 5,000 mJ/cm$^2$, preferably, 1,000 to 4,000 mJ/cm$^2$, and more preferably 2,000 to 3, 000 mJ/cm$^2$. When the irradiation amount of ultraviolet rays is less than 100 mJ/cm$^2$, sufficient degree of polymerization may not be obtained, whereas when the irradiation amount of ultraviolet rays is more than 5,000 mJ/cm$^2$, the deterioration of the composite film may be caused.

Furthermore, the temperature at which irradiation is performed with ultraviolet ray or the like is not particularly limited and can be set arbitrarily. However, when the temperature is too high, a termination reaction tends to occur due to the heat of polymerisation and thus cause a reduction in the characteristics of the film. Usually, the temperature is 70°C or less, preferably 50°C or less, and more preferably 30°C or less.

The thickness of the composite film of the present invention can be selected appropriately depending on the purpose and the like. For example, when the adhesive sheet is used as chipping for protecting an automobile body, the thickness of the composite film is preferably about 50 to about 500 μm, more preferably about 100 to about 300 μm.

A coating layer can be applied on one surface or both surfaces of the composite film of this invention. The material for forming the coating layer is not particularly limited. As the materials, there can be used generally-used ones which include resins such as (meth) acrylate-based resin, urethane-based resin, urethane acrylate-based resin, silicone-based resin, fluorine compound-based resin, polyolefin-based resin, polycarbonate-based resin; metal deposition products; or the like. The coating layer is preferably, obtained by using fluorine compound-based resins in particular, and for example, is preferably a fluoroethylene vinyl ether layer. By providing the coating layer, properties such as a surface gloss property, abrasion resistance, an antifouling property, and water repellency can be imparted to the composite film, and also the effect of suppressing the deterioration of the composite film itself can be ensured.

The method for forming the coating layer is not particularly limited. There can be applied, for example, a method of directly coating solvent-based coating agents, emulsion-based coating agents or the like on the composite film and being dried, a method of coating the coating agents on a release paper to form a coating layer in advance and then transferring the coating layer to the composite film by a method such as thermocompression bonding, a method for forming a coating layer on a release-treated film in advance and then forming the composite film on the coating layer by curing, a method for forming a coating layer on a release-treated film by using radiation curable coating agents in advance and then transferring the coating layer to the composite film, a method of coating radiation curable coating agents on one surface of the composite film and coating radiation curable adhesives on the other surface thereof and then being irradiated with radiation, preferably, being irradiated with radiation from both surfaces of the composite film, to thereby cure the coating layer and the adhesive layer at the same time, a method for forming a coating layer by depositing metallic oxides on the composite film, and the like.

Meanwhile, when the coating layer is provided on the composite film, the configuration is preferably, such that the composite film has the coating layer on one surface and the adhesive layer on the other surface thereof.

The thickness of the coating layer is preferably 2 to 50 μm, more preferably 5 to 40μm, and particularly preferably 8 to 30 μm. When the thickness of the coating layer is less than 2 μm, defect portions are prone to be generated in which the coating layer is not formed, such as a pinhole, and the characteristics of the coating layer may not be exhibited sufficiently. When the thickness of the coating layer is more than 50 μm, the physical properties of the coating layer may cause a reduction in the physical properties of the composite film.

Although the composite film of the present invention can be used even as it now stands, the film can also be made into an adhesive sheet by forming an adhesive layer on one surface or both surfaces of the composite film. The composition of adhesive is not particularly limited and those generally used adhesives such as acrylic-based adhesives and rubber-based adhesives can be used. The method for forming the adhesive layer is not also particularly limited. There can be applied a method for directly coating solvent-based adhesives or emulsion-based adhesives on the composite film and being dried, a method for coating such adhesives on a release paper to form an adhesive layer in advance and then bonding the adhesive layer to the composite film, and the like. There can also be applied a method of coating radiation curable adhesives on the composite film, and curing the composite film and the adhesive layer at the same time by irradiating both of them with radiation. Meanwhile, in this case, the adhesive layer and the composite film can also be coated so as to be a multilayer construction. Alternatively, the adhesive layer may also be provided on the separator, and then the composite film may be formed on the adhesive layer.

The thickness of the adhesive layer is not particularly limited and can be set arbitrarily. Usually, the thickness of the adhesive layer is preferably, 3 to 100 μm, more preferably 10 to 50 μm, and particularly preferably approximately 10 to 30 μm.

Examples of the base that can be used in the present invention include polyester-based resins such as polyethylene terephthalate (PET) and polybutylene terephthalate (PET); polyolefin-based resins such as polyethylene (PE), polypropylene (PP), high-density polyethylene, and biaxially oriented polypropylene; thermoplastic resins such as polyimide (PI), polyether ether ketone (PEEK), polyvinyl chloride (PVC), polyvinylidene chloride-based resins, polyamide-based resins, polyurethane-based resins, polystyrene-based resins, acrylic-based resins, fluorine-contained-based resins, cellulose-based resins, and polycarbonate-based resins; and in addition thermosetting resins and the like. Among these, PET is preferably used since it has suitable hardness when used in processing high precision parts, and further it is advantageous from the viewpoints of a variety of kinds and low price. It is preferable that the material of the film is determined appropriately depending on the kind of the adhesive layer to be provided in accordance with the intended use and necessity. For example, when an ultraviolet ray-curable adhesive is provided, a base having high ultraviolet transmission is preferable.

In the present invention, other films can be laminated on one or both surfaces of the composite film. Examples of materials forming the other films include polyester-based resins such as polyethylene terephthalate (PET) ; polyolefin-based resins such as polyethylene (PE) and polypropylene (PP) ; thermoplastic resins such as polyimide (PI), polyether ether ketone (PEEK), polyvinyl chloride (PVC), polyvinylidene chloride-based resins, polyamide-based resins, polyurethane-based resins, polystyrene-based resins, acrylic-based resins, fluoro-containing-based resins, cellulose-based resins, and polycarbonate-based resins; and in addition thermosetting resins and the like. Meanwhile, the other film may be of a single layer structure or may be of a multi-layer structure with a plurality of layers made up of the same or different materials.

The composite film of the present invention can have both high strength and high breaking extension, and also excellent flexibility to curved surfaces. Accordingly, the composite film is preferably used as a protective sheet for protecting every painted surface of automobiles, motorcycles, aircrafts, wings for wind power generation and the like, and for example, the composite film can be bonded and used on adhesive coated on adherents such as painted surfaces of automobiles or buildings. Alternatively, the composite film can also be used as an adhesive sheet having an adhesive layer on the composite film, and in this case, the adhesive sheet is preferably used as a chipping sheet and body protection film, applied on an automobile body and the like. Moreover, the composite film of the present invention has excellent weathering resistance, heat resistance and moist-heat resistance, and thus the good appearance of the film is not deteriorated due to coloring (yellowing), deterioration in surface gloss or the like, even after being left outdoors for a long time.

EXAMPLES

Hereinafter, the present invention will be explained in more detail by examples. However, the present invention is not limited thereto. It should be noted that in the following examples, unless otherwise noted specifically, and within usual technical concept, all parts are parts by weight and all percents are % by weight. Furthermore, the calculation method of the polymerization ratio and the evaluation of the weathering resistance, heat resistance, and moist-heat resistance, used in the examples, are shown in the following.
In the following evaluations, an acrylic baked white panel (Nippon Testpanel Co., Ltd.) used as a standard test panel had a L* value of 95.68 to 98.56, an a* value of -1.26 to -1.01, a b* value of 0.16 to 1.52.

(1) Calculation Method of Non-Volatile Component (Polymerization Ratio)

The weight (W1) after removing the cast film and the separator from the resultant composite film is measured. After the measurement, the composite film is heat-treated at 130°C for two hours and the unreacted (meth) acrylic-based monomer was removed. The weight (W2) of the composite film after the heat-treatment is measured, and the polymerisation ratio (non-volatile component) is calculated based on the following equation.

$$\text{Polymerization ratio (Non-volatile component) (\%)} = (\text{weight (W2) after heat treatment} / \text{weight (W1) before heat treatment}) \times 100$$

(2) Evaluation of Weathering resistance (Yellowing Resistance)

After peeling and removing the cast film and the separator from the composite film, an acrylic-based adhesive layer is formed at a thickness of 50 μm on one surface of the composite film, and an adhesive tape is produced. The adhesive tape is bonded to an acrylic baked white panel (a standard test panel, manufactured by Nippon Testpanel Co., Ltd.) through the use of a roller, and then an initial b* value (at an acceptance angle of 15 degrees) is measured through the use of a multi-angle spectrocolorimeter ("MA68II" manufactured by X-Right K. K.).

After that, a b* value (at an acceptance angle of 15 degrees) of the adhesive tape after 120 hours in an accelerated weathering test (10 cycles) is measured. The accelerated weathering test is performed through the use of a metal weather meter (product name "Daipla Metalweather KU-R5N" manufactured by DAIPLA WINTES Co., LTD) for four hours under the condition of irradiation (panel temperature of 63°C, relative humidity of 70%), four hours under the condition of irradiation and rainfall (panel temperature of 70°C, relative humidity of 90%), and four hours in the dark (panel temperature of 30°C, relative humidity of 98%), totally 12 hours are defined as one cycle.
A Δb* value is calculated by obtaining a difference between the measured value of b* at an acceptance angle of between the measured value of b* at on acceptance angle of 15 degrees after the accelerated weathering test and the initially measured value of b* at an acceptance angle of 15 degrees.

(3) Evaluation of Heat resistance (Yellowing Resistance)

After peeling and removing the cast film and the separator from the composite film, an acrylic-based adhesive layer is formed at a thickness of 50 μm on one surface of the composite film and an adhesive tape is produced. The adhesive tape is bonded to an acrylic baked white panel (a standard test panel, manufactured by Nippon Testpanel Co., Ltd.) through the use of a roller, and then an initial b* value (at an acceptance angle of 15 degrees) is measured through the use of a multi-angle spectrocolorimeter ("MA68II" manufactured by X-Right K. K.).
A b* value (at an acceptance angle of 15 degrees) of the adhesive tape bonded to the acrylic baked white panel after an accelerated heat resistance test carried out in a dark place for 4 weeks through the use of an oven (Device name "Oven OH-201" manufactured by ESPEC Co., Ltd.) which is set at 80°C.
A Δb* value is calculated by obtaining a difference between the measured value of b* at an acceptance angle of 15 degrees after the accelerated heat resistance test and the initially measured value of b* at an acceptance angle of 15 degrees.

(4) Evaluation of Moist-heat resistance (Yellowing Resistance)

After peeling and removing the cast film and the separator from the composite film, an acrylic-based adhesive layer is formed at a thickness of 50 μm on one surface of the composite film and an adhesive tape is produced. The adhesive tape is bonded to an acrylic baked white panel (a standard test panel, manufactured by Nippon Testpanel Co., Ltd.) through the use of a roller, and then an initial b* value (at an acceptance angle of 15 degrees) is measured through the use of a multi-angle spectrocolorimeter ("MA68II" manufactured by X-Right K. K.).
A b* value (at an acceptance angle of 15 degrees) of the adhesive tape bonded to the acrylic baked white panel after an accelerated moist-heat resistance test carried out in a dark place for 4 weeks through the use of an oven (Device name "Constant Temperature and Humidity machine PR-3KT" manufactured by ESPEC Co. , Ltd.) which is set at a temperature of 85°C and a relative humidity of 85%.
A Δb* value is calculated by obtaining a difference between the measured value of b* at an acceptance angle of 15 degrees after the accelerated moist-heat resistance test and the initially measured value of b* at an acceptance angle of 15 degrees.

(EXAMPLE 1)

To 100 parts by weight of a solution of fluoroethylene vinyl ether in xylene and toluene ("LF600" manufactured by Asahi Glass Co., Ltd., containing 50% of solid content), 10.15 parts of an isocyanate-based cross-linking agent ("CORONATE HX" manufactured by Nippon Polyurethane Industry Co., Ltd.) as a curing agent and 3.5 parts of a xylene-diluted solution (0.01% by weight of concentration of dibutyltin dilaurate) of dibutyltin dilaurate ("OL1" manufactured by Tokyo Fine Chemical Co., Ltd.) as a catalyst were added and a coating solution for fluoroethylene vinyl ether layer was obtained. The coating solution was coated on a release-treated polyethylene terephthalate (PET) film (thickness 75 μm) so as to become a thickness after curing of 10 μm, dried and cured at 140°C for three minutes, and a PET film having a fluoroethylene vinyl ether layer was formed.
In a reactor equipped with a condenser, a thermometer, and an agitator, there were charged 5 parts of acrylic acid (AA), 35 parts of isobornyl acrylate (IBXA) and 10 parts of n-butyl acrylate (BA) as an acrylic-based monomer, and 36.4 parts of polyoxytetramethylene glycol (PTMG) (number-average molecular weight 650, manufactured by Mitsubishi Chemical Corporation) as a polyol. With stirring, 13.6 parts of hydrogenated xylylene diisocyanates (HXDI) was dripped and the mixture was allowed to react at 65°C for 10 hours and a urethane polymer-acrylic based monomer mixture (composite film precursor) was obtained. The amount of the polyisocyanate component and the polyol component used was NCO/OH (equivalent ratio) = 1.25.
After that, 3 parts of trimethylolpropane triacrylate (TMPTA), 1.0 part of a hydroxyphenyltriazine-based ultraviolet absorber (TINUVIN 400 manufactured by Ciba Japan K.K.), 1.0 part of a hindered amine light stabilizer (Viosorb 765

manufactured by KYODO YAKUHIN K.K.), 1.0 part of a phosphorus-based compound A (a mixture of triisodecyl phosphite, diisodecyl phenyl phosphite, isodecyl diphenyl phosphite and triphenyl phosphate, manufactured by KYODO YAKUHIN K.K.) were added. Furthermore, bis(2,4,6-trimethylbenzoyl)phenyl-phosphine oxide (IRGACURE 819 manufactured by Ciba Japan K.K.) as a photopolymerization initiator so as to be 0.3 parts relative to the acrylic components were added and then were sufficiently stirred, and the additives or the like was completely dissolved. As a result, a precursor mixture for the composite film was obtained.

The precursor mixture was coated on the fluoroethylene vinyl ether layer (coating layer) of the release-treated PET film so as to become a cured thickness of 150 μm. After covering this layer by superimposing, as a separator, a release-treated polyethylene terephthalate (PET) film (thickness 38 μm), the superimposed separator surface was irradiated with ultraviolet rays (illuminance 290 mW/cm$^2$,light amount 4,600 mJ/cm$^2$) from a metal halide lamp and was cured, and a composite film (provided with the separator) having the fluoroethylene vinyl ether layer stacked was formed on the release-treated PET film.

With respect to the obtained composite film (with the coating layer), the release-treated PET film and the separator were removed, and then the calculation of the polymerisation ratio (non-volatile component) and the evaluation of weathering resistance, heat resistance, moist-heat resistance (yellowing) were performed, in accordance with the aforementioned methods. The results are shown in Table 1. However, in the evaluation of the weathering resistance, heat resistance, and moist-heat resistance, the adhesive layer was provided on a surface opposite to the surface stacked with the fluoroethylene vinyl ether layer (coating layer).

(EXAMPLE 2)

A composite film (provided with the separator) having the fluoroethylene vinyl ether layer stacked on the release-treated PET film was formed in the same manner as in EXAMPLE 1 except that a coating amount of the precursor mixture was changed so as to become a cured thickness of 300 μm.
The obtained composite film was measured and evaluated in the same manner as in EXAMPLE 1. The results are shown in Table 1.

(EXAMPLE 3)

A composite film (provided with the separator) having the fluoroethylene vinyl ether layer stacked on the release-treated PET film was formed in the same manner as in EXAMPLE 1 except that the phosphorus-based compound was changed to a phosphorus-based compound B (a mixture of triisodecyl phosphite, diisodecyl phenyl phosphite and isodecyl diphenyl phosphate, manufactured by KYODO YAKUHIN K.K.) and a coating amount of the precursor mixture was changed so as to become a cured thickness of 150 μm.
The obtained composite film was measured and evaluated in the same manner as in EXAMPLE 1. The results are shown in Table 1.

(EXAMPLE 4)

A composite film (provided with the separator) having the fluoroethylene vinyl ether layer stacked on the release-treated PET film was formed in the same manner as in EXAMPLE 3 except that a coating amount of the precursor mixture was changed so as to become a cured thickness of 300 μm.
The obtained composite film was measured and evaluated in the same manner as in EXAMPLE 1. The results are shown in Table 1.

(EXAMPLE 5)

A composite film (provided with the separator) having the fluoroethylene vinyl ether layer stacked on the release-treated PET film was formed in the same manner as in EXAMPLE 1 except that 1.0 part by weight of a phenol-based compound (Irganox 1135 manufactured by Ciba Japan K.K.) was used instead of the phosphorus-based compound and a coating amount of the precursor mixture was changed so as to become a cured thickness of 150 μm.
The obtained composite film was measured and evaluated in the same manner as in EXAMPLE 1. The results are shown in Table 1.

(EXAMPLE 6)

A composite film (provided with the separator) having the fluoroethylene vinyl ether layer stacked on the release-treated PET film was formed in the same manner as in EXAMPLE 5 except that a coating amount of the precursor

mixture was changed so as to become a cured thickness of 300 μm.
The obtained composite film was measured and evaluated in the same manner as in (EXAMPLE 1. The results are shown in Table 1.

(EXAMPLE 7)

A composite film (provided with the separator) having the fluoroethylene vinyl ether layer stacked on the release-treated PET film was formed in the same manner as in EXAMPLE 1 except that 0.5 part of the phosphorus-based compound A and 0.5 part of the phenol-based compound (Irganox 1135 manufactured by Ciba Japan K.K.) was used instead of 1.0 part of the phosphorus-based compound A, and a coating amount of the precursor mixture was changed so as to become a cured thickness of 150 μm.
The obtained composite film was measured and evaluated in the same manner as in EXAMPLE 1. The results are shown in Table 1.

(EXAMPLE 8)

A composite film (provided with the separator) having the fluoroethylene vinyl ether layer stacked on the release-treated PET film was formed in the same manner as in EXAMPLE 7 except that a coating amount of the precursor mixture was changed so as to become a cured thickness of 300 μm.
The obtained composite film was measured and evaluated in the same manner as in EXAMPLE 1. The results are shown in Table 1.

(EXAMPLE 9)

A composite film (provided with the separator) having the fluoroethylene vinyl ether layer stacked on the release-treated PET film was formed in the same manner as in EXAMPLE 1 except that 0.5 part of the phosphorus-based compound B and 0.5 part of the phenol-based compound (Irganox 1135 manufactured by Ciba Japan K.K.) was used instead of 1.0 part of the phosphorus-based compound A, and a coating amount of the precursor mixture was changed so as to become a cured thickness of 150 μm.
The obtained composite film was measured and evaluated in the same manner as in EXAMPLE 1. The results are shown in Table 1.

(EXAMPLE 10)

A composite film (provided with the separator) having the fluoroethylene vinyl ether layer stacked on the release-treated PET film was formed in the same manner as in EXAMPLE 9 except that a coating amount of the precursor mixture was changed so as to become a cured thickness of 300 μm.
The obtained composite film was measured and evaluated in the same manner as in EXAMPLE 1. The results are shown in Table 1.

(EXAMPLE 11)

A composite film (provided with the separator) having the fluoroethylene vinyl ether layer stacked on the release-treated PET film was formed in the same manner as in EXAMPLE 7 except that a kind of the ultraviolet absorber was changed to a benzotriazole-based ultraviolet absorber (TINUVIN 213 manufactured by Ciba Japan K.K.), and a coating amount of the precursor mixture was changed so as to become a cured thickness of 150 μm.
The obtained composite film was measured and evaluated in the same manner as in EXAMPLE 1. The results are shown in Table 1.

(EXAMPLE 12)

A composite film (provided with the separator) having the fluoroethylene vinyl ether layer stacked on the release-treated PET film was formed in the same manner as in EXAMPLE 11 except that a coating amount of the precursor mixture was changed so as to become a cured thickness of 300 μm.
The obtained composite film was measured and evaluated in the same manner as in EXAMPLE 1. The results are shown in Table 1.

(EXAMPLE 13)

A composite film (provided with the separator) having the fluoroethylene vinyl ether layer stacked on the release-treated PET film was formed in the same manner as in EXAMPLE 9 except that a kind of the ultraviolet absorber was changed to a benzotriazole-based ultraviolet absorber (TINUVIN 213 manufactured by Ciba Japan K.K.), and a coating amount of the precursor mixture was changed so as to become a cured thickness of 150 μm.
The obtained composite film was measured and evaluated in the same manner as in EXAMPLE 1. The results are shown in Table 1.

(EXAMPLE 14)

A composite film (provided with the separator) having the fluoroethylene vinyl ether layer stacked on the release-treated PET film was prepared in the same manner as in EXAMPLE 13 except that a coating amount of the precursor mixture was changed so as to become a cured thickness of 300 μm.
The obtained composite film was measured and evaluated in the same manner as in EXAMPLE 1. The results are shown in Table 1.

(EXAMPLE 15)

To 100 parts by weight of a solution of fluoroethylene vinyl ether in xylene and toluene ("LF600" manufactured by Asahi Glass Co., Ltd., containing 50 % of solid content), 10.15 parts of an isocyanate-based cross-linking agent ("CORONATE HX" manufactured by Nippon Polyurethane Industry Co. , Ltd.) as a curing agent and 3.5 parts of a xylene diluted solution (0.01 % by weight of concentration of dibutyltin dilaurate) of dibutyltin dilaurate ("OL1" manufactured by Tokyo Fine Chemical Co., Ltd.) as a catalyst were added to obtain a coating solution for the a fluoroethylene vinyl ether layer. The coating solution was coated on a release-treated polyethylene terephthalate (PET) film (thickness 75 μm) so as to become a thickness after curing of 10 μm, and was dried and cured at 140°C for three minutes to form a PET film having a fluoroethylene vinyl ether layer.

In a reactor provided with a condenser, a thermometer, and an agitator, there were added 5 parts of acrylic acid (AA), 30 parts of isobornyl acrylate (IBXA) and 15 parts of n-butyl acrylate (BA) as an acrylic-based monomer, and 35.05 parts of polyoxytetramethylene glycol (PTMG) (number-average molecular weight 650, manufactured by Mitsubishi Chemical Corporation) as a polyol. With stirring, 14.95 parts of isophorone diisocyanates (IPDI) was dripped and the mixture was allowed to react at 65°C for 10 hours to obtain a urethane polymer-acrylic based monomer mixture (composite film precursor). After that, 4.23 parts of 4-hydroxybutyl acrylate was dripped and the mixture was allowed to react at 65°C for 1 hour. The amount of the polyisocyanate component and the polyol component used was NCO/OH (equivalent ratio) = 1.25.

After that, 9 parts of trimethylolpropane triacrylate (TMPTA), 1.25 parts of a hydroxyphenyltriazine-based ultraviolet absorber (TINUVIN 400 manufactured by BASF Japan Ltd.), 0.54 part of a hindered amine light stabilizer (Viosorb 765 manufactured by KYODO YAKUHIN K.K.), and 0.30 part of a hindered amine light stabilizer (TINUVIN 123 manufactured by BASF Japan Ltd.), 1.07 parts of the phosphorus-based compound A (a mixture of triisodecyl phosphite, diisodecyl phenyl phosphite, isodecyl diphenyl phosphite and triphenyl phosphate, manufactured by KYODO YAKUHIN K.K.), 0.55 part of a phenol-based compound (Irganox 1520L manufactured by BASF Japan Ltd.) were added. Furthermore, bis(2,4,6-trimethylbenzoyl)phenyl-phosphine oxide (IRGACURE 819 manufactured by BASF Japan Ltd.) as a photopolymerization initiator so as to become 0.3 parts relative to the acrylic components were added and then were sufficiently stirred, and the additives or the like were completely dissolved. Thus a precursor mixture for the composite film was obtained.

The precursor mixture was coated on the fluoroethylene vinyl ether layer (coating layer) of the release-treated PET film so as to become a cured thickness of 150 μm. After covering this layer by superimposing, as a separator, a release-treated polyethylene terephthalate (PET) film (thickness 38 μm), the superimposed separator surface was irradiated with ultraviolet rays (illuminance 290 mW/cm$^2$, light amount 4,600 mJ/cm$^2$) from a metal halide lamp and was cured, and a composite film (provided with the separator) having the fluoroethylene vinyl ether layer stacked was formed on the release-treated PET film.

With respect to the obtained composite film (with the coating layer), the release-treated PET film and the separator were removed, and then the calculation of the polymerization ratio (non-volatile component) and the evaluation of weathering resistance, heat resistance, moist-heat resistance (yellowing) were performed, in accordance with the aforementioned methods. The results are shown in Table 1. However, in the evaluation of the weathering resistance, heat resistance, and moist-heat resistance, the adhesive layer was provided on a surface opposite to the surface stacked with the fluoroethylene vinyl ether layer (coating layer).

(EXAMPLE 16)

A composite film (provided with the separator) having the fluoroethylene vinyl ether layer stacked on the release-treated PET film was formed in the same manner as in EXAMPLE 15 except that a blending amount of the hindered amine light stabilizer (Viosorb 765 manufactured by KYODO YAKUHIN K.K.) was changed to 1.13 parts, and a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.26 parts.
The obtained composite film was measured and evaluated in the same manner as in EXAMPLE 1. The results are shown in Table 1.

(EXAMPLE 17)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 0.59 part and a blending amount of TINUVIN 123 (manufactured by BASF Japan Ltd.) was changed to 1.20 parts, and a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.18 parts.
The obtained composite film was measured and evaluated in the same manner as in EXAMPLE 1. The results are shown in Table 1.

(EXAMPLE 18)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.13 parts and a blending amount of TINUVIN 123 (manufactured by BASF Japan Ltd.) was changed to 1.20 parts, and a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.26 parts.
The obtained composite film was measured and evaluated in the same manner as in EXAMPLE 1. The results are shown in Table 1.

(EXAMPLE 19)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K. K.) was changed to 0.83 part and a blending amount of TINUVIN 123 (manufactured by BASF Japan Ltd.) was changed to 0.75 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K. K.) was changed to 1.67 parts, and a blending amount of a phenol-based compound (Irganox 1520L manufactured by BASF Japan Ltd.) was changed to 0.25 part.
The obtained composite film was measured and evaluated in the same manner as in EXAMPLE 1. The results are shown in Table 1.

(EXAMPLE 20)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K. K.) was changed to 1. 33 parts and a blending amount of TINUVIN 123 (manufactured by BASF Japan Ltd.) was changed to 0.75 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K. K.) was changed to 2.67 parts, and a blending amount of a phenol-based compound (Irganox 1520L manufactured by BASF Japan Ltd.) was changed to 1.00 part.
The obtained composite film was measured and evaluated in the same manner as in EXAMPLE 1. The results are shown in Table 2.

(EXAMPLE 21)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 0.33 part and a blending amount of TINUVIN 123 (manufactured by BASF Japan Ltd.) was changed to 0.75 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 0.67 parts, and a blending amount of a phenol-based compound (Irganox1520L manufactured by BASF Japan Ltd.) was changed to 1.00 part.
The obtained composite film was measured and evaluated in the same manner as in EXAMPLE 1. The results are shown in Table 2.

(EXAMPLE 22)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 0.83 part and a blending amount of TINUVIN 123 (manufactured by BASF Japan Ltd.) was changed to 1.50 parts, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.67 parts, and a blending amount of a phenol-based compound (Irganox 1520L manufactured by BASF Japan Ltd.) was changed to 1.00 part.
The obtained composite film was measured and evaluated in the same manner as in EXAMPLE 1. The results are shown in Table 2.

(EXAMPLE 23)

A composite film (provided with the separator) having the fluoroethylene vinyl ether layer stacked on the release-treated PET film was formed in the same manner as in EXAMPLE 15 except that, as the hindered amine light stabilizer, a blending amount of (Viosorb 765 (manufactured by KYODO YAKUHIN K.K.) was changed to 0.83 part and a blending amount of TINUVIN 123 (manufactured by BASF Japan Ltd.) was changed to 0.75 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.67 parts, and a blending amount of a phenol-based compound (Irganox 1520L manufactured by BASF Japan Ltd.) was changed to 1.00 part.
The obtained composite film was measured and evaluated in the same manner as in EXAMPLE 1. The results are shown in Table 2.

(EXAMPLE 24)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 0.50 part and a blending amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.00 part, and a blending amount of a phenol-based compound (Irganox1520L manufactured by BASF Japan Ltd.) was changed to 0.25 part.
The obtained composite film was measured and evaluated in the same manner as in EXAMPLE 1. The results are shown in Table 2.

(EXAMPLE 25)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1. 00 part and a blending amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.00 parts, and a blending amount of a phenol-based compound (Irganox 1520L manufactured by BASF Japan Ltd.) was changed to 0.25 part.
The obtained composite film was measured and evaluated in the same manner as in EXAMPLE 1. The results are shown

in Table 2.

(EXAMPLE 26)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.00 part and a blending amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.00 parts, and a blending amount of a phenol-based compound (Irganox 1520L manufactured by BASF Japan Ltd.) was changed to 0.50 part.
The obtained composite film was measured and evaluated in the same manner as in EXAMPLE 1. The results are shown in Table 2.

(EXAMPLE 27)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 0.50 part and a blending amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.00 part, and a kind of the phenol-based compound was changed to (Irganox 1135 manufactured by BASF Japan Ltd.) and a blending amount thereof was changed to 0.50 part.
The obtained composite film was measured and evaluated in the same manner as in EXAMPLE 1. The results are shown in Table 2.

(EXAMPLE 28)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.00 part and a blending amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.00 parts, and a kind of the phenol-based compound was changed to (Irganox 1135 manufactured by BASF Japan Ltd.) and a blending amount thereof was changed to 0.50 part.
The obtained composite film was measured and evaluated in the same manner as in EXAMPLE 1. The results are shown in Table 2.

(EXAMPLE 29)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K. K.) was changed to 0.50 part and a blending amount of TINUVIN 123 (manufactured by BASF Japan Ltd.) was changed to 0.50 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.00 part, and a blending amount of a phenol-based compound (Irganox 1520L manufactured by BASF Japan Ltd.) was changed to 0.50 part.
The obtained composite film was measured and evaluated in the same manner as in EXAMPLE 1. The results are shown in Table 2.

(EXAMPLE 30)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.00 part and a blending amount of TINUVIN 123 (manufactured by BASF Japan Ltd.) was changed to 0.50 part, a blending amount of the

phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.00 parts, and a blending amount of a phenol-based compound (Irganox 1520L manufactured by BASF Japan Ltd.) was changed to 0.50 part.
The obtained composite film was measured and evaluated in the same manner as in EXAMPLE 1. The results are shown in Table 2.

(EXAMPLE 31)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 0.50 part and a blending amount of TINUVIN 123 (manufactured by BASF Japan Ltd.) was changed to 0.50 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 1.00 part, and a blending amount of a phenol-based compound (Irganox 1520L manufactured by BASF Japan Ltd.) was changed to 0.25 part.
The obtained composite film was measured and evaluated in the same manner as in EXAMPLE 1. The results are shown in Table 2.

(EXAMPLE 32)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.00 part and a blending amount of TINUVIN 123 (manufactured by BASF Japan Ltd.) was changed to 0.50 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.00 parts, and a blending amount of a phenol-based compound (Irganox 1520L manufactured by BASF Japan Ltd.) was changed to 0.25 part.
The obtained composite film was measured and evaluated in the same manner as in (EXAMPLE 1. The results are shown in Table 2.

(EXAMPLE 33)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.33 parts and a blending amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.67 parts.
The obtained composite film was measured and evaluated in the same manner as in EXAMPLE 1. The results are shown in Table 2.

(EXAMPLE 34)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1. 33 parts and a blending amount of TINUVIN 123 (manufactured by BASF Japan Ltd.) was changed to 0.50 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.67 parts, and a blending amount of a phenol-based compound (Irganox 1520L manufactured by BASF Japan Ltd.) was changed to 0.50 part.
The obtained composite film was measured and evaluated in the same manner as in EXAMPLE 1. The results are shown in Table 2.

(EXAMPLE 35)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.33 parts and a blending

amount of TINUVIN 123 (manufactured by BASF Japan Ltd.) was changed to 0 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.K.) was changed to 2.67 parts, and a blending amount of a phenol-based compound (Irganox 1520L manufactured by BASF Japan Ltd.) was changed to 0.25 part.
The obtained composite film was measured and evaluated in the same manner as in EXAMPLE 1. The results are shown in Table 2.

(EXAMPLE 36)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 (manufactured by KYODO YAKUHIN K.K.) was changed to 1.33 parts and a blending amount of TINUVIN 123 (manufactured by BASF Japan Ltd.) was changed to 0.50 part, a blending amount of the phosphorus-based compound A (a mixture of triisodecyl phosphite, diisodecyl phenyl phosphite, isodecyl diphenyl phosphite and triphenyl phosphate, manufactured by KYODO YAKUHIN K.k.) was changed to 2. 67 parts, and a blending amount of a phenol-based compound (Irganox 1520L manufactured by BASF Japan Ltd.) was changed to 0.25 part.
The obtained composite film was measured and evaluated in the same manner as in EXAMPLE 1. The results are shown in Table 2.

(EXAMPLE 37)

A composite film (provided with the separator) having the fluoroethylene vinyl ether layer stacked on the release-treated PET film was formed in the same manner as in EXAMPLE 15 except that a blending amount of the hindered amine light stabilizer (Viosorb 765 manufactured by KYODO YAKUHIN K.K.) was changed to 0 part and a blending amount of TINUVIN 123 (manufactured by BASF Japan Ltd.) was changed to 1.25 parts, a blending amount of the phosphorus-based compound A was changed to 0 part, and a kind of the phenol-based compound was changed to Irganox 1135 (manufactured by BASF Japan Ltd.) and a blending amount thereof was changed to 0.50 part.
The obtained composite film was measured and evaluated in the same manner as in EXAMPLE 1. The results are shown in Table 2.

(EXAMPLE 38)

A composite film (provided with the separator) having the fluoroethylene vinyl ether layer stacked on the release-treated PET film was formed in the same manner as in EXAMPLE 15 except that, as the hindered amine light stabilizer, a blending amount of Viosorb 765 was changed to 0 part and a blending amount of TINUVIN 123 (manufactured by BASF Japan Ltd.) was changed to 1.25 parts, a blending amount of the phosphorus-based compound A was changed to 0 part, and a kind of the phenol-based compound was changed to Irganox 1135 (manufactured by BASF Japan Ltd.) and a blending amount thereof was changed to 1.00 part.
The obtained composite film was measured and evaluated in the same manner as in EXAMPLE 1. The results are shown in Table 2.

(COMPARATIVE EXAMPLE 1)

A composite film (provided with the separator) having the fluoroethylene vinyl ether layer stacked on the release-treated PET film was formed in the same manner as in EXAMPLE 1 except that none of an ultraviolet absorber, a hindered amine-based light stabilizer and a phosphorus-based compound were used (namely, an ultraviolet absorber was 0 part, and a hindered amine-based light stabilizer was 0 part).
The obtained composite film was measured and evaluated in the same manner as in EXAMPLE 1. The results are shown in Table 3.

(COMPARATIVE (EXAMPLE 2)

A composite film (provided with the separator) having tha fluoroethylene vinyl ether layer stacked on the release-treated PET film was formed in the same manner as in COMPARATIVE EXAMPLE 1 except that a coating amount of the precursor mixture was changed so as to become a cured thickness of 300 $\mu$m.
The obtained composite film was measured and evaluated in the same manner as in EXAMPLE 1. The results are shown in Table 3.

(COMPARATIVE (EXAMPLE 3)

A composite film (provided with the separator) having the fluoroethylene vinyl ether layer stacked on the release-treated PET film was formed in the same manner as in EXAMPLE 1 except that a blending amount of the ultraviolet absorber (TINUVIN 400 manufactured by Ciba Japan K.K.) was changed to 1.25 parts, the kind and the blending amount of the hindered amine-based light stabilizer were changed to 1.25 parts of a hindered amine light stabilizer (TINUVIN 123 manufactured by Ciba Japan K.K.), and a phosphorus-based compound was not used.
The obtained composite film was measured and evaluated in the same manner as in EXAMPLE 1. The results are shown in Table 3.

(COMPARATIVE EXAMPLE 4)

A composite film (provided with the separator) having the fluoroethylene vinyl ether layer stacked on the release-treated PET film was formed in the same manner as in COMPARATIVE EXAMPLE 3 except that a coating amount of the precursor mixture was changed so as to become a cured thickness of 300 μm.
The obtained composite film was measured and evaluated in the same manner as in EXAMPLE 1. The results are shown in Table 3.

(COMPARATIVE EXAMPLE 5)

A composite film (provided with the separator) having the fluoroethylene vinyl ether layer stacked on the release-treated PET film was formed in the same manner as in EXAMPLE 15 except that none of an ultraviolet absorber, a hindered amine-based light stabilizer and a phosphorus-based compound, a phenol-based compound were used (namely, an ultraviolet absorber was 0 part, a hindered amine-based light stabilizer was 0 part, and a phosphorus-based compound was 0 part, a phenol-based compound was 0 part).
The obtained composite film was measured and evaluated in the same manner as in EXAMPLE 1. The results are shown in Table 3.
[Table 1]

[Table 1]

| | Ultraviolet Absorbed note 1 | | Light stabilizer Note 2 | | Phosphorus-based compoundNote3 | | Phenol-based compound Note 4 | | Photopolymerization initiatorNote5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resistance | Heat resistance | Moist-heat resistance |
| | T400 | T213 | T123 | Vio765 | A | B | Irg 1135 | Irg 1520L | Irg819 | | | | After 120 h | Aftrer 4 weeks | After 4 weeks |
| Ex. 1 | 1.0 | | | 1.0 | 1.0 | | | | 0.3 | Existing | 150 | 98.59 | 2.36 | 1.45 | 5.10 |
| Ex. 2 | 1.0 | | | 1.0 | 1.0 | | | | 0.3 | Existing | 300 | 98.59 | 1.77 | 1.67 | 4.40 |
| Ex. 3 | 1.0 | | | 1.0 | | 1.0 | | | 0.3 | Existing | 150 | 98.85 | 2.10 | 1.54 | 3.72 |
| Ex. 4 | 1.0 | | | 1.0 | | 1.0 | | | 0.3 | Existing | 300 | 98.85 | 1.63 | 1.66 | 3.35 |
| Ex. 5 | 1.0 | | | 1.0 | | | 1.0 | | 0.3 | Existing | 150 | 98.67 | 3.69 | 1.87 | 4.21 |

(continued)

| | Ultraviolet Absorbed note 1 | | Light stabilizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resistance | Heat resistance | Moist-heat resistance |
| | T400 | T213 | T123 | Vio765 | A | B | Irg 1135 | Irg 1520L | Irg819 | | | | After 120 h | Aftrer 4 weeks | After 4 weeks |
| Ex. 6 | 1.0 | | | 1.0 | | | 1.0 | | 0.3 | Existing | 300 | 98.67 | 3.43 | 2.59 | 4.46 |
| Ex. 7 | 1.0 | | | 1.0 | 0.5 | | 0.5 | | 0.3 | Existing | 150 | 98.66 | 3.19 | 1.50 | 4.01 |
| Ex. 8 | 1.0 | | | 1.0 | 0.5 | | 0.5 | | 0.3 | Existing | 300 | 98.66 | 2.65 | 1.93 | 4.77 |
| Ex. 9 | 1.0 | | | 1.0 | | 0.5 | 0.5 | | 0.3 | Existing. | 150 | 98.69 | 2.86 | 1.54 | 3.83 |
| Ex. 10 | 1.0 | | | 1.0 | | 0.5 | 0.5 | | 0.3 | Existing | 300 | 98.69 | 2.46 | 1.79 | 4.31 |

(continued)

| | Ultraviolet Absorbed [note 1] | | Light stabilizer [Note 2] | | Phosphorus-based compound[Note3] | | Phenol-based compound [Note 4] | | Photopolymerization initiator[Note5] | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resistance | Heat resistance | Moist-heat resistance |
| | T400 | T213 | T123 | Vio765 | A | B | Irg 1135 | Irg 1520L | Irg819 | | | | After 120 h | Aftrer 4 weeks | After 4 weeks |
| Ex. 11 | | 1.0 | | 1.0 | 0.5 | | 0.5 | | 0.3 | Existing | 150 | 98.61 | 2.62 | 1.63 | 3.74 |
| Ex. 12 | | 1.0 | | 1.0 | 0.5 | | 0.5 | | 0.3 | Existing | 300 | 98.61 | 2.28 | 1.92 | 3.98 |
| Ex. 13 | | 1.0 | | 1.0 | | 0.5 | 0.5 | | 0.3 | Existing | 150 | 98.80 | 3.08 | 1.61 | 3.54 |
| Ex. 14 | | 1.0 | | 1.0 | | 0.5 | 0.5 | | 0.3 | Existing | 300 | 98.80 | 2.31 | 1.79 | 3.51 |

(continued)

| | Ultraviolet Absorbed [note 1] | | Light stabilizer [Note 2] | | Phosphorus-based compound[Note3] | | Phenol-based compound [Note 4] | | Photopolymerization initiator[Note5] | Coating layer | Thickness of composite film ($\mu$m) | Non-volatile component (%) | $\Delta b^*$ value | | |
|---|---|---|---|---|---|---|---|---|---|---|---|---|---|---|---|
| | | | | | | | | | | | | | Weathering resistance | Heat resistance | Moist-heat resistance |
| | T400 | T213 | T123 | Vio765 | A | B | Irg 1135 | Irg 1520L | Irg819 | | | | After 120 h | Aftrer 4 weeks | After 4 weeks |
| Ex. 15 | 1.25 | | 0.30 | 0.54 | 1.07 | | | 0.55 | 0.3 | Existing | 150 | 98.54 | 2.16 | 1.24 | 0.13 |
| Ex. 16 | 1.25 | | 0.30 | 1.13 | 2.26 | | | 0.55 | 0.3 | Existing | 150 | 98.09 | 1.86 | 0.94 | 1.82 |
| Ex. 17 | 1.25 | | 1.20 | 0.59 | 1. 18 | | | 0.55 | 0.3 | Existing | 150 | 98.82 | 2.14 | 1.78 | 2.41 |
| Ex. 18 | 1.25 | | 1.20 | 1.13 | 2.26 | | | 0.55 | 0.3 | Existing | 150 | 98.47 | 1.71 | 1.08 | 2.66 |

(continued)

| | Ultraviolet Absorbed note 1 | | Light stabilizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resistance | Heat resistance | Moist-heat resistance |
| | T400 | T213 | T123 | Vio765 | A | B | Irg 1135 | Irg 1520L | Irg819 | | | | After 120 h | Aftrer 4 weeks | After 4 weeks |
| Ex. 19 | 1.25 | | 0.75 | 0.83 | 1.67 | | | 0.25 | 0.3 | Existing | 150 | 97.86 | 0.97 | 1.04 | 2.05 |
| Note) Numerals in Table represent part. | | | | | | | | | | | | | | | |

Notes in Table 1, Table 2 and Table 3:

Note 1) Ultraviolet absorber T400: TINUVIN 400
T213: TINUVIN 213
Note 2) Light stabilizer T123: TINUVIN 123
Vio765: Viosorb 765
Note 3) Phosphorus-based compound A: Mixture of triisodecyl phosphite, diisodecyl phenyl phosphite, isodecyl diphenyl phosphite and triphenyl phosphite
Phosphorus-based compound B: Mixture of triisodecyl phosphite, diisodecyl phenyl phosphite, and isodecyl diphenyl phosphite
Note 4) Phenol-based compound Irg1135: Irganox 1135
Irg1520L: Irganox 1520L
Note 5) Photoinitiator Irg819: Irgacure 819

[Table 2]

[Table 2]

| | Ultraviolet Absorber [note 1] | | Light stablizer[Note 2] | | Phosphorus-based compound[Note3] | | Phenol-based compound [Note 4] | | Photopolymerization initiator[Note5] | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resitance | Weathering resistance | Weathering resistance |
| | T400 | T213 | T123 | Vio 765 | A | B | Irg 1135 | Irg 1520L | Irg819 | | | | After 120 h | Aftrer 4 weeks | After 4 weeks |
| Ex. 20 | 1.25 | | 0.75 | 1.33 | 2.67 | | | 1.00 | 0.3 | Existing | 150 | 98.82 | 3.21 | 0.90 | 2.62 |
| Ex. 21 | 1.25 | | 0.75 | 0.33 | 0.67 | | | 1.00 | 0.3 | Existing | 150 | 98.90 | 3.57 | 2.05 | 2.96 |
| Ex. 22 | 1.25 | | 1.50 | 0.83 | 1.67 | | | 1.00 | 0.3 | Existing | 150 | 98.47 | 3.46 | 1.38 | 2.58 |
| Ex. 23 | 1.25 | | 0.75 | 0.83 | 1.67 | | | 1.00 | 0.3 | Existing | 150 | 98.23 | 3.64 | 0.98 | 2.28 |

(continued)

| | Ultraviolet Absorber note 1 | | Light stablizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resitance | Weathering resistance | Weathering resistance |
| | T400 | T213 | T123 | Vio 765 | A | B | Irg 1135 | Irg 1520L | Irg819 | | | | After 120 h | Aftrer 4 weeks | After 4 weeks |
| Ex. 24 | 1.25 | | | 0.50 | 1.00 | | | 0.25 | 0.3 | Existing | 150 | 98.82 | 1.54 | 0.80 | 2.83 |
| Ex. 25 | 1.25 | | | 1.00 | 2.00 | | | 0.25 | 0.3 | Existing | 150 | 98.09 | 1.23 | 0.39 | 2.68 |
| Ex. 26 | 1.25 | | | 1.00 | 2.00 | | | 0.50 | 0.3 | Existing | 150 | 98.82 | 2.31 | 0.63 | 2.65 |
| Ex. 27 | 1.25 | | | 0.50 | 1.00 | | 0.50 | | 0.3 | Existing | 150 | 98.90 | 1.04 | 1.00 | 2.85 |

(continued)

| | Ultraviolet Absorber note 1 | | Light stablizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resitance | Weathering resistance | Weathering resistance |
| | T400 | T213 | T123 | Vio 765 | A | B | Irg 1135 | Irg 1520L | Irg819 | | | | After 120 h | Aftrer 4 weeks | After 4 weeks |
| Ex. 28 | 1.25 | | | 1.00 | 2.00 | | 0.50 | | 0.3 | Existing | 150 | 98.82 | 1.11 | 0.75 | 2.90 |
| Ex. 29 | 1.25 | | 0.50 | 0.50 | 1.00 | | | 0.50 | 0.3 | Existing | 150 | 98.90 | 1.79 | 1.34 | 2.19 |
| Ex. 30 | 1.25 | | 0.50 | 1.00 | 2.00 | | | 0.50 | 0.3 | Existing | 150 | 98.47 | 1.75 | 0.97 | 2.07 |
| Ex. 31 | 1.25 | | 0.50 | 0.50 | 1.00 | | | 0.25 | 0.3 | Existing | 150 | 98.32 | 1.15 | 1.48 | 2.18 |

(continued)

| | Ultraviolet Absorber note 1 | | Light stablizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resitance | Weathering resistance | Weathering resistance |
| | T400 | T213 | T123 | Vio 765 | A | B | Irg 1135 | Irg 1520L | Irg819 | | | | After 120 h | Aftrer 4 weeks | After 4 weeks |
| Ex. 32 | 1.25 | | 0.50 | 1.00 | 2.00 | | | 0.25 | 0.3 | Existing | 150 | 98.23 | 1.04 | 1.19 | 2.48 |
| Ex. 33 | 1.25 | | | 1.33 | 2.67 | | | 0.55 | 0.3 | Existing | 150 | 98.54 | 1.79 | 0.84 | 2.39 |
| Ex. 34 | 1.25 | | 0.50 | 1.33 | 2.67 | | | 0.50 | 0.3 | Existing | 150 | 98.33 | 1.56 | 0.74 | 2.06 |
| Ex. 35 | 1.25 | | | 1.33 | 2.67 | | | 0.25 | 0.3 | Existing | 150 | 98.09 | 1.54 | 0.54 | 2.15 |

(continued)

| | Ultraviolet Absorber note 1 | | Light stablizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resitance | Weathering resistance | Weathering resistance |
| | T400 | T213 | T123 | Vio 765 | A | B | Irg 1135 | Irg 1520L | Irg819 | | | | After 120 h | Aftrer 4 weeks | After 4 weeks |
| Ex. 36 | 1.25 | | 0.50 | 1.33 | 2.67 | | | 0.25 | 0.3 | Existing | 150 | 97.86 | 1.72 | 0.74 | 2.39 |
| Ex. 37 | 1.25 | | 1.25 | | | | 0.50 | | 0.3 | Existing | 150 | 98.82 | 1.17 | 3.20 | 2.88 |
| Ex. 38 | 1.25 | | 1.25 | | | | 1.00 | | 0.3 | Existing | 150 | 98.90 | 1.50 | 3.46 | 3.68 |

Note) Numerals in Table represent part.

[Table 3]

[Table 3]

| | Ultraviolet Absorber note 1 | | Light stabilizer Note 2 | | Phosphorus-based compound Note3 | | Phenol-based compound Note 4 | | Photopolymerization initiator Note5 | Coating layer | Thickness of composite film (μm) | Non-volatile component (%) | Δb* value | | |
|---|---|---|---|---|---|---|---|---|---|---|---|---|---|---|---|
| | | | | | | | | | | | | | Weathering resistance | Weathering resistance | Weathering resistance |
| | T400 | T213 | T123 | Vio 765 | A | B | Irg 135 | Irg 1520 L | Irg819 | | | | After 120 h | Aftrer 4 weeks | After 4 weeks |
| Compar. Ex. 1 | | | | | | | | | 0.3 | Existing | 150 | 98.93 | 9.64 | 1. 45 | 3. 49 |
| Compar. Ex. 2 | | | | | | | | | 0.3 | Existing | 300 | 98.93 | 7.72 | 1.62 | 3.42 |
| Compar. Ex. 3 | 1.25 | | 1.25 | | | | | | 0.3 | Existing | 150 | 98.57 | 3.01 | 2.46 | 9.51 |
| Compar. Ex. 4 | 1.25 | | 1.25 | | | | | | 0.3 | Existing | 300 | 98.57 | 2.11 | 4.17 | 12.11 |
| Compar. Ex. 5 | | | | | | | | | 0.30 | Existing | 150 | 98.82 | 3.03 | 7.95 | 4.87 |
| Note) Numerals in Table represent part. | | | | | | | | | | | | | | | |

As is clear from Tables 1 to 3, it has been found that the composite films of EXAMPLE 1 to 38 according to the present invention has a small $\Delta b^*$ value even with the lapse of time with respect to the weathering resistance, heat resistance, moist-heat resistance (yellowing), and thus are films having excellent weathering resistance, heat resistance, and moist-heat resistance. In addition, it has been found that the polymerization ratios of the composite films were 98% or more.
On the other hand, as is clear from Table 3, it has been found that COMPARATIVE EXAMPLE 1 and 2 in which an ultraviolet absorber and a hindered amine-based light stabilizer are not contained are remarkably inferior in weathering resistance.
In addition, it has been found that COMPARATIVE EXAMPLE 3 and 4 were excellent in weathering resistance but was inferior in moist-heat resistance. Furthermore, it has been found that COMPARATIVE EXAMPLE 5 was inferior in heat resistance.
According to the present invention, a composite film having excellent photo-curable property and excellent weathering resistance, heat resistance, and moist-heat resistance was able to be provided. Moreover, a composite film having a sufficient strength and causing no problem of an odor was provided.

INDUSTRIAL APPLICABILITY

The composite film of the present invention can be used preferably for a film required to have weathering resistance, heat resistance, moist-heat resistance, and further flexibility and water resistance. For example, the composite film can be used as a film for protection of a surface exposed to a harmful environment including outdoor weather, solvent, dust, oil and fats, marine environments or the like, and as a film for decoration. Furthermore, the composite film is also suitable for a chipping tape for protecting an automobile body and a sheet for body protection film.

## Claims

1. A composite film, comprising at least a urethane polymer,
wherein a $\Delta b^*$ value (value at an acceptance angle of 15 degrees) measured by a spectrocolorimeter after 120 hours in an accelerated weathering test and a $\Delta b^*$ value (value at an acceptance angle of 15 degrees) in an accelerated heat resistance test in a dark place under an atmosphere of 80°C are both 4.0 or less, and a $\Delta b^*$ value (value at an acceptance angle of 15 degrees) in an accelerated moist-heat resistance test in a dark place under an atmosphere of 85°C and 85% relative humidity is 6.0 or less.

2. The composite film according to claim 1, wherein the composite film contains at least one kind of an ultraviolet absorber, at least one kind of a hindered amine light stabilizer, and at least one kind of a phosphorus-based compound and/or at least one kind of a phenol-based compound.

3. The composite film according to any one of claims 1 to 2, comprising a (meth) acrylic-based polymer and a urethane polymer.

4. The composite film according to any one of claims 1 to 3, wherein the composite film is obtained be irradiating a precursor mixture in which at least one kind of an ultraviolet absorber, at least one kind of a hindered amine light stabilizer, at least one kind of an acylphosphine-based photopolymerization initiator, and at least one kind of phosphorus-based compound and/or a phenol-based compound are added to a composite film precursor having at least a urethane polymer, with a light in a photosensitive wavelength range of the photopolymerization initiator.

5. The composite film according to claim 4, wherein the composite film precursor is one that includes a (meth)acrylic-based monomer and a urethane polymer.

6. The composite film according to any one of claims 4 to 5, wherein the acylphosphine-based photopolymerization initiator includes at least one of monoacylphosphine oxides represented by the following formula (I) and/or at least one of diacylphosphine oxides represented by the following formula (II),

[Chemical Formula 14]

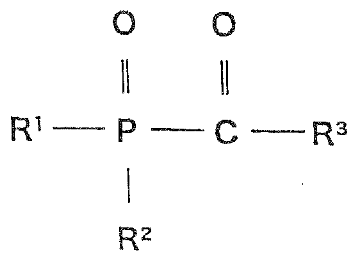

(I)

wherein $R^1$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen and $C_1$ to $C_6$ alkoxy groups; a phenyl group, a naphthyl group or a biphenyl group, substituted by at least one selected from the group consisting of halogen, $C_1$ to $C_{12}$ alkyl groups and $C_1$ to $C_{12}$ alkoxy groups; or a five-membered or six-membered heterocyclic group containing monovalent, O, or S, $R^2$ represents a phenyl group, a naphthyl group or a biphenyl group; a phenyl group, a naphthyl group or a biphenyl group, substituted by at least one selected from the group consisting of halogen, $C_1$ to $C_{12}$ alkyl groups and $C_1$ to $C_{12}$ alkoxy groups; a five-membered or six-membered heterocyclic group containing monovalent N, O, or S, a $C_1$ to $C_{18}$ alkoxy group, or a phenoxy group; or a phenoxy group, a benzyloxy group or a cyclohexyloxy group, substituted by at least one selected from the group consisting of halogen, $C_1$ to $C_4$ alkyl groups and $C_1$ to $C_4$ alkoxy groups; or $R^2$ and $R^1$ form a ring together with a phosphorus atom; $R^3$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen and $C_1$ to $C_6$ alkoxy groups; a phenyl group, a naphthyl group or a biphenyl group, substituted by at least one selected from the group consisting of halogen, $C_1$ to $C_{12}$ alkyl groups, and $C_1$ to $C_{12}$ alkoxy groups; a five-membered or six-membered heterocyclic group containing monovalent N, O, or S; or represents a group represented by the following formula:

[Chemical Formula 15]

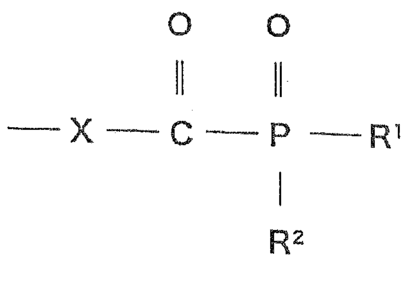

wherein, X represents a $C_2$ to $C_8$ alkylene group or a cyclohexylene group; or represents a phenylene group or a biphenylene group, unsubstituted or substituted by at least one selected from the group consisting of halogen, $C_1$ to $C_4$ alkyl groups and $C_1$ to $C_4$ alkoxy groups,

[Chemical Formula 16]

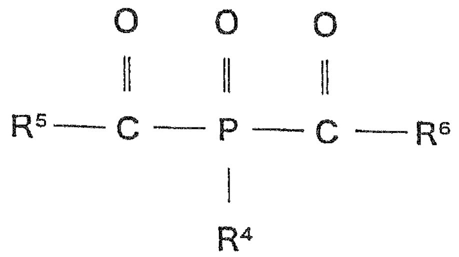

(II)

wherein, $R^4$ represents a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen and $C_1$ to $C_6$ alkoxy groups; a phenyl group, a naphthyl group or a biphenyl group, substituted by at least one selected from the group consisting of halogen, $C_1$ to $C_{12}$ alkyl groups and $C_1$ to $C_{12}$ alkoxy groups; a five-membered or six-membered heterocyclic group containing monovalent N, O, or S, a $C_1$ to $C_{18}$ alkoxy group or a phenoxy group; or a phenoxy group, a benzyloxy group, a cyclohexyloxy group, substituted by at least one selected from the group consisting of halogen, $C_1$ to $C_4$ alkyl groups, and $C_1$ to $C_4$ alkoxy groups; and $R^5$ and $R^6$, independently from each other, represent a $C_1$ to $C_{18}$ alkyl group; a $C_1$ to $C_4$ alkyl group, a $C_5$ to $C_8$ cycloalkyl group, a $C_7$ to $C_9$ phenylalkyl group, a phenyl group, a naphthyl group or a biphenyl group, substituted by at least one selected from the group consisting of halogen and $C_1$ to $C_6$ alkoxy groups; a phenyl group, a naphthyl group or a biphenyl group, substituted by at least one selected from the group consisting of halogen, $C_1$ to $C_{12}$ alkyl groups and $C_1$ to $C_{12}$ alkoxy groups; or a five-membered or six-membered heterocyclic group containing monovalent N, O, or S.

**7.** The composite film according to any one of claims 4 to 6, wherein the precursor mixture further contains an α-hydroxyalkylphenone-based photopolymerization initiator.

**8.** The composite film according to any one of claims 2 to 7, wherein the ultraviolet absorber contains at least one kind of ultraviolet absorber selected from the group consisting of benzotriazole-type ultraviolet absorbers and hydroxyphenyltriazine-type ultraviolet absorbers.

**9.** The composite film according to any one of claims 4 to 8, wherein a blending amount of the photopolymerization initiator is 0.05% by weight or more and 4.0% by weight or less relative to the amount of a (meth)acrylic component.

**10.** The composite film according to any one of claims 2 to 9, wherein a blending amount of the ultraviolet absorber is 0.1% by weight or more and 4.0% by weight or less relative to 100% by weight of the composite film precursor.

**11.** The composite film according to any one of claims 2 to 10, wherein a blending amount of the hindered amine light stabilizer is 0.1% by weight or more and 4.0% by weight or less relative to 100% by weight of the composite film precursor.

**12.** The composite film according to any one of claims 2 to 11, wherein a blending amount of the phosphorus-based compound is 0.1% by weight or more and 4.0% by weight or less relative to 100% by weight of the composite film precursor.

**13.** The composite film according to any one of claims 2 to 12, wherein a blending amount of the phenol-based compound is 0.1% by weight or more and 4.0% by weight or less relative to 100% by weight of the composite film precursor.

**14.** The composite film according to any one of claims 1 to 13, wherein the urethane polymer is formed by using at least one kind of diisocyanate selected from the group consisting of methylcyclohexane diisocyanate (hydrogenated TDI), dicyclohexylmethane diisocyanate (hydrogenated MDI), cyclohexane diisocyanate (hydrogenated PPDI), bis(isocyanatomethyl)cyclohexane (hydrogenated XDI), norbornene diisocyanate (NBDI), isophorone diisocyanate (IPDI), hexamethylene diisocyanate (HDI), butane diisocyanate, 2,4-trimethylhexamethylene diisocyanate, and 2,4,4-trimethylhexamethylene diisocyanate.

**15.** The composite film according to any one of claims 3 to 14, wherein a weight ratio of the (meth)acrylic-based polymer to the urethane polymer in the composite film is within the range of acrylic-based polymer / urethane polymer = 1/99 to 80/20.

**16.** The composite film according to any one of claims 1 to 15, wherein the composite film contains 1% by weight or more and 15% by weight or less of an acrylic acid-based monomer.

**17.** An adhesive sheet having an adhesive layer on at least one surface of the composite film according to any one of claims 1 to 16.

**18.** The composite film according to claim 17, wherein the adhesive sheet is used as a protective sheet for protecting a surface of an adherent.

**INTERNATIONAL SEARCH REPORT**

International application No.
PCT/JP2010/070476

A. CLASSIFICATION OF SUBJECT MATTER
*C08J5/18*(2006.01)i, *C08F2/44*(2006.01)i, *C08F283/00*(2006.01)i, *C08K5/13*(2006.01)i, *C08K5/3435*(2006.01)i, *C08K5/49*(2006.01)i, *C08L33/00*(2006.01)i, *C08L75/04*(2006.01)i, *C09J7/02*(2006.01)i

According to International Patent Classification (IPC) or to both national classification and IPC

B. FIELDS SEARCHED

Minimum documentation searched (classification system followed by classification symbols)
C08J5/00-5/02, C08J5/12-5/22, C08F2/44, C08F283/00, C08G18/00-18/87, C08G71/00-71/04, C08K3/00-13/08, C08L1/00-101/14, C09J7/00-7/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2008/026751 A1 (Nippon Zeon Co., Ltd.),<br>06 March 2008 (06.03.2008),<br>claims; paragraphs [0010], [0016], [0017], [0022], [0035]<br>(Family: none) | 1-3,10-16<br>4-9,17,18 |
| X<br>Y | JP 2005-314488 A (Zeon Kasei Co., Ltd.),<br>10 November 2005 (10.11.2005),<br>claims; paragraphs [0001], [0017], [0046], [0056], [0057]<br>(Family: none) | 1-3,10-16<br>4-9,17,18 |
| X | JP 2625508 B2 (Nisshinbo Industries, Inc.),<br>02 July 1997 (02.07.1997),<br>claims; page 3, left column, line 29 to page 4, right column, line 28<br>(Family: none) | 1,2,8,10-14 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08 December, 2010 (08.12.10) | Date of mailing of the international search report<br>21 December, 2010 (21.12.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/070476

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-526678 A (Ciba Specialty Chemicals Holding Inc.), 24 November 2006 (24.11.2006), claims; paragraphs [0050] to [0053] & US 2007/0060667 A1 & EP 1629054 A & WO 2004/106444 A1 | 4-7,9 |
| Y | JP 2003-096140 A (Nitto Denko Corp.), 03 April 2003 (03.04.2003), claims (Family: none) | 17,18 |
| P,X | WO 2009/139241 A1 (Nitto Denko Corp.), 19 November 2009 (19.11.2009), entire text & JP 2009-299034 A & US 2010/0196704 A & EP 2186849 A1 & CN 101688011 A | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001520127 W
- JP 2003096140 A
- JP 9137016 A
- JP 2625508 B